# EUROPÄISCHE PATENTANMELDUNG

(11) **EP 4 241 992 A1**
(43) Veröffentlichungstag der Anmeldung: **13.09.2023**
(21) Anmeldenummer: 22161142.9
(22) Anmeldetag: 09.03.2022
(51) Int. Cl.: B41C 1/05, B23K 26/00, B41C 1/18, B41M 1/04, B41M 1/10

(54) **MEHRFACH-LASERGRAVUR**

(71) Anmelder: AKK GmbH, 47809 Krefeld (DE)
(72) Erfinder: Kesper, Peer, 47800 Krefeld (DE)
(74) Vertreter: Cohausz & Florack

(57) **Zusammenfassung**

Die Erfindung betrifft ein Verfahren und eine Vorrichtung zur Herstellung einer Druckform mittels Lasergravur. Die Vorrichtung (200) umfasst:
- Mittel zum Unterteilen eines auf einer Oberfläche der Druckform (210) zu erzeugenden Gravurbilds (212) in mindestens zwei Bildsektionen (214, 216) durch Definition mindestens einer Sektionsgrenze (218) zwischen den mindestens zwei Bildsektionen (214, 216);
- Mittel (230, 240, 242, 244, 252) zum Gravieren der Oberfläche der Druckform (210) unter Verwendung von mindestens zwei Lasergraviereinheiten (230), wobei die Mittel (230, 240, 242, 244, 252) zum Gravieren der Oberfläche der Druckform (210) dazu konfiguriert sind, dass jede der mindestens zwei Bildsektionen (214, 216) von einer der mindestens zwei Lasergraviereinheiten (230) simultan graviert wird.
Die Aufgabe, ein Verfahren und eine Vorrichtung zur Herstellung einer Druckform mittels Lasergravur anzugeben, bei dem unabhängig von der Beschaffenheit des zu erzeugenden Gravurbilds eine Verkürzung der Gravurzeit durch Verwendung mehrerer Lasergraviereinheiten erreicht werden kann, wird für die Vorrichtung (200) dadurch gelöst, dass die Mittel (252) zum Unterteilen des Gravurbilds (212) dazu konfiguriert sind, die mindestens eine Sektionsgrenze (218) so zu definieren, dass mindestens ein Abschnitt der mindestens einen Sektionsgrenze (218) durch einen Gravurbereich (220) des Gravurbilds verläuft.

## Beschreibung

Die Erfindung betrifft ein Verfahren zur Herstellung von Druckformen mittels Lasergravur. Ferner betrifft die Erfindung eine Vorrichtung oder ein System zur Herstellung von Druckformen mittels Lasergravur, ein Computerprogrammprodukt, sowie eine Verwendung einer Druckform.

Druckformen, insbesondere für den Flexodruck, aber beispielsweise auch für den Tiefdruck, werden heute zunehmend mittels Lasergravur hergestellt. Hierbei wird Material von einer Oberfläche der Druckform abgetragen, indem das Oberflächenmaterial durch einen Laserstrahl lokal so stark erhitzt wird, dass es verdampft. Dadurch wird ein Gravurbild auf der Oberfläche der Druckform erzeugt, welches je nach Druckverfahren eine Art gespiegeltes Negativ des späteren Druckbilds darstellt. Das Lasergravurverfahren zeichnet sich durch eine hohe Präzision bei der Herstellung entsprechender Druckformen aus.

Beim Flexodruck lassen sich in Bezug auf das Druckbild Volltonbereiche, Halbtonbereiche und Weißbereiche voneinander unterscheiden. In einem Volltonbereich druckt die Oberfläche der Druckform vollflächig auf den Bedruckstoff. Beispiele für Volltonbereiche sind unter anderem die Buchstaben und sonstigen typografischen Zeichen eines zu druckenden Textes sowie die Linien einer zu druckenden Strichzeichnung. In einem Halbtonbereich weist die Oberfläche der Druckform hingegen eine Rasterung auf, sodass nur die einzelnen Rasterpunkte des Halbtonbereichs auf den Bedruckstoff drucken, nicht jedoch die gesamte Fläche des Halbtonbereichs. Die Rasterpunkte sind üblicherweise kreisförmig, können jedoch auch andere Formen annehmen. Ferner sind Überlappungen zwischen den einzelnen Rasterpunkten möglich. Beispiele für Halbtonbereiche sind unter anderem zu druckende Halbtonbilder. In einem Weißbereich bleibt der Bedruckstoff vollflächig unbedruckt. Beispiele für Weißbereiche sind unter anderem die Bereiche zwischen den einzelnen typografischen Zeichen eines zu druckenden Textes, die Bereiche zwischen den einzelnen Linien einer zu druckenden Strichzeichnung, sowie Abstandsbereiche zwischen Texten, Strichzeichnungen und Halbtonbilder. Der Begriff Weißbereich wird dabei unabhängig davon verwendet, ob ein weißer Bedruckstoff wie beispielsweise Papier oder ein andersfarbiger Bedruckstoff verwendet wird. Als Bedruckstoffe kommen neben Papier insbesondere auch Karton, Pappe, Gummi, sowie verschiedene Kunststoffe, beispielsweise PE, PET, PVC, PS, PP und PC in Frage.

In Entsprechung zu den soeben beschriebenen drei möglichen Bereichen eines Druckbilds beim Flexodruck lassen sich auch in Bezug auf das Gravurbild der mittels Lasergravur hergestellten Druckformen drei verschiedene Bereiche unterscheiden. Diesbezüglich ist zu berücksichtigen, dass der Flexodruck eine Form des Hochdrucks darstellt, was bedeutet, dass erhabene beziehungsweise erhöhte Elemente der Oberfläche der Druckform den Bedruckstoff bedrucken, und nicht erhabene beziehungsweise vertiefte Elemente der Oberfläche der Druckform den Bedruckstoff unbedruckt belassen. Um im späteren Druckbild einen Weißbereich zu erzeugen, muss deshalb beim Gravieren Material von der Oberfläche der Druckform vollflächig abgetragen werden. Ferner muss, um einen Halbtonbereich zu erzeugen, beim Gravieren ein teilflächiger Materialabtrag von der Oberfläche der Druckform derart stattfinden, dass eine Rasterung mit einzelnen Rasterpunkten entsteht. Die Rasterpunkte können sowohl erhöhte als auch vertiefte Elemente der Oberfläche der Druckform darstellen. Schließlich muss, um einen Volltonbereich zu erzeugen, die Oberfläche der Druckform beim Gravieren vollflächig ungraviert bleiben, sodass kein, insbesondere auch kein teilflächiger Materialabtrag von der Oberfläche stattfindet.

In diesem Zusammenhang wird im Rahmen der vorliegenden Patentanmeldung unter einem Vollgravurbereich ein Bereich des Gravurbilds verstanden, in dem eine vollflächige Gravur der Druckform erfolgt. Ferner wird unter einem Rastergravurbereich ein Bereich des Gravurbilds verstanden, in dem eine teilflächige Gravur zur Erzeugung von Rasterpunkten erfolgt. Schließlich wird unter einem Freibereich ein Bereich des Gravurbilds verstanden, in dem keine, insbesondere auch keine teilflächige Gravur erfolgt. Vollgravurbereiche und Rastergravurbereiche werden mit dem Oberbegriff Gravurbereich bezeichnet. Dies bedeutet, dass im Rahmen der vorliegenden Patentanmeldung unter einem Gravurbereich ein Bereich des Gravurbilds verstanden wird, in dem eine vollflächige Gravur und/oder eine teilflächige Gravur zur Erzeugung von Rasterpunkten erfolgt.

Im Gegensatz zum Flexodruck gilt beim Tiefdruck, dass erhabene beziehungsweise erhöhte Elemente der Oberfläche der Druckform den Bedruckstoff unbedruckt belassen, und nicht erhabene beziehungsweise vertiefte Elemente der Oberfläche der Druckform den Bedruckstoff bedrucken. Eine Besonderheit des Tiefdrucks ist, dass hier alle zu druckenden Elemente des Druckbilds, also insbesondere auch Texte und Strichzeichnungen, gerastert werden. Insofern existieren bei einer mittels Lasergravur hergestellten Druckform für den Tiefdruck lediglich Rastergravurbereiche und Freibereiche. Die Rastergravurbereiche entsprechen im späteren Druckbild den bedruckten Bereichen, während die Freibereiche den Weißbereichen entsprechen.

Nachdem die Herstellung von Druckformen mittels Lasergravur sehr zeitaufwendig ist, unabhängig davon, ob es sich um Druckformen für den Flexodruck oder um Druckformen für den Tiefdruck handelt, wird seit jeher nach Lösungen gesucht, welche eine Verkürzung der Gravurzeit ermöglichen. Hierzu ist es aus dem Stand der Technik für die Gravur von Druckzylindern für den Tiefdruck bereits bekannt, das auf der Oberfläche der Druckform zu erzeugende Gravurbild in mehrere Bildsektionen zu unterteilen, indem Sektionsgrenzen zwischen den Bildsektionen definiert werden. Anschließend werden die Druckformen von mehreren Lasergraviereinheiten graviert, wobei jede der zuvor festgelegten Bildsektionen von jeweils einer Lasergraviereinheit simultan graviert wird.

Wie jedoch beispielsweise aus der europäischen Patentanmeldung EP 2058122 A1 hervorgeht, können die Sektionsgrenzen bei der simultanen Gravur durch mehrere Lasergraviereinheiten bisher nur durch Freibereiche des Gravurbilds gelegt werden. Dies hängt einerseits damit zusammen, dass die Eigenschaften der einzelnen Lasergraviereinheiten aufgrund von nicht vermeidbaren Abweichungen wie beispielsweise Fertigungstoleranzen nicht zwangsläufig perfekt identisch sind, was sich auch auf das jeweilige Gravurergebnis in den einzelnen Bildsektionen auswirkt. Beispielsweise können die Intensität der Laser oder die Leistung der Laser geringfügig voneinander abweichen. Da es demnach möglich ist, dass die einzelnen Bildsektionen auf geringfügig unterschiedliche Art und Weise graviert werden, können Sektionsgrenzen, die nicht durch einen Freibereich verlaufen, im späteren Druckbild optisch erkennbar sein. Dies gilt insbesondere dann, wenn die Sektionsgrenze durch einen Rastergravurbereich verläuft, da das menschliche Auge bei der Wahrnehmung von gerasterten Flächen auch für geringfügige Unterschiede der Rasterung sehr empfindlich ist. Andererseits können sich jedoch auch Ungenauigkeiten bei der Positionierung der Lasergraviereinheiten ergeben. Diese Ungenauigkeiten können im schlimmsten Fall dazu führen, dass beispielsweise bei der Gravur eines Vollgravurbereichs durch mehrere Lasergraviereinheiten an bestimmten Stellen entlang einer Sektionsgrenze kein Abtrag des Materials der Oberfläche der Druckform erfolgt. Stattdessen entstehen an diesen Stellen erhabene Bereiche, die im späteren Druck zu einem Farbabtrag auf den Bedruckstoff innerhalb eines Weißbereichs und somit zu einer direkten optischen Sichtbarkeit der Sektionsgrenze führen.

Folglich kann vor allem ein Gravurbild, welches keinen durchgängigen Freibereich aufweist, gemäß des derzeitigen Stands der Technik nicht von mehreren Lasergraviereinheiten simultan graviert werden, sodass hier keine Verkürzung der Gravurzeit möglich ist. Ferner ist für ein Gravurbild, welches durchgängige Freibereiche nur nahe am Rand des Gravurbilds aufweist, die mögliche Verkürzung der Gravurzeit minimal, da sich hierbei die Größe der einzelnen Bildsektionen, die von jeweils einer Lasergraviereinheit simultan graviert werden, stark unterscheidet und somit eine vergleichsweise große Bildsektion weiterhin nur von einer einzigen Lasergraviereinheit simultan graviert werden kann. In solchen Fällen wird aufgrund der lediglich geringen Zeitersparnis sogar oft komplett auf die simultane Gravur durch mehrere Lasergraviereinheiten verzichtet.

Vor diesem Hintergrund liegt der vorliegenden Erfindung die Aufgabe zugrunde, ein Verfahren zur Herstellung von Druckformen mittels Lasergravur anzugeben, bei dem unabhängig von der Beschaffenheit des zu erzeugenden Gravurbilds eine Verkürzung der Gravurzeit bei der Verwendung mehrerer Lasergraviereinheiten erreicht werden kann. Ferner hat sich der Erfindung die Aufgabe gestellt, eine entsprechende Vorrichtung oder ein System zur Herstellung von Druckformen mittels Lasergravur, ein entsprechendes Computerprogrammprodukt, sowie eine vorteilhafte Verwendung einer durch das Verfahren hergestellten Druckform anzugeben.

Gemäß einer ersten Lehre der Erfindung wird die oben genannte Aufgabe durch ein Verfahren zur Herstellung einer Druckform mittels Lasergravur gelöst. Das Verfahren umfasst hierbei:
- Unterteilen eines auf einer Oberfläche der Druckform zu erzeugenden Gravurbilds in mindestens zwei Bildsektionen durch Definition mindestens einer Sektionsgrenze zwischen den mindestens zwei Bildsektionen;
- Gravieren der Oberfläche der Druckform unter Verwendung von mindestens zwei Lasergraviereinheiten, wobei jede der mindestens zwei Bildsektionen von einer der mindestens zwei Lasergraviereinheiten simultan graviert wird.

Die Lösung der Aufgabe erfolgt für ein solches Verfahren dadurch, dass beim Unterteilen des Gravurbilds die mindestens eine Sektionsgrenze so definiert wird, dass mindestens ein Abschnitt der mindestens einen Sektionsgrenze durch einen Gravurbereich des Gravurbilds verläuft.

Im Rahmen der Erfindung wurde erkannt, dass eine Verkürzung der Gravurzeit bei der Verwendung mehrerer Lasergraviereinheiten dadurch erreicht werden kann, dass entgegen dem bisherigen Stand der Technik mindestens ein Abschnitt der mindestens einen beim Unterteilen des Gravurbilds definierten Sektionsgrenze durch einen Gravurbereich des Gravurbilds verläuft. Darunter, dass mindestens ein Abschnitt der mindestens einen Sektionsgrenze ,durch' einen Gravurbereich verläuft, wird verstanden, dass die mindestens eine Sektionsgrenze mindestens einen Schnittpunkt mit einem Rand des Gravurbereichs aufweist. Dadurch, dass mindestens ein Abschnitt der mindestens einen Sektionsgrenze durch einen Gravurbereich des Gravurbilds verläuft, kann beispielsweise auch ein Gravurbild, welches keinen durchgängigen Freibereich aufweist, von mehreren Lasergraviereinheiten simultan graviert werden. Dies ist mit den eingangs beschriebenen Verfahren des Stands der Technik bisher nicht möglich. Ferner kann beispielsweise ein Gravurbild, welches durchgängige Freibereiche nur nahe am Rand des Gravurbilds aufweist, innerhalb einer kürzeren Gravurzeit als bisher graviert werden, da die Größenunterschiede der einzelnen Bildsektionen, die von jeweils einer Lasergraviereinheit simultan graviert werden, reduziert werden können. Insgesamt lässt sich mit dem erfindungsgemäßen Verfahren damit unabhängig von der Beschaffenheit des zu erzeugenden Gravurbilds eine Verkürzung der Gravurzeit bei der Verwendung mehrerer Lasergraviereinheiten erzielen.

In einer bevorzugten Ausführungsform des Verfahrens wird die mindestens eine Sektionsgrenze so definiert, dass mindestens ein Abschnitt der mindestens einen Sektionsgrenze durch einen Rastergravurbereich des Gravurbilds verläuft. Wie eingangs aufgezeigt, ist eine durch einen Rastergravurbereich verlaufende Sektionsgrenze in den beschriebenen Verfahren des Stands der Technik nicht möglich. Dadurch, dass mindestens ein Abschnitt der mindestens einen Sektionsgrenze durch einen Rastergravurbereich des Gravurbilds verläuft, kann insbesondere auch ein Gravurbild, dessen Gravurbereiche ausschließlich Rastergravurbereiche sind, von mehreren Lasergraviereinheiten simultan graviert werden. Solche Gravurbilder sind beispielsweise alle denkbaren Gravurbilder für den Tiefdruck sowie Gravurbilder für den Flexodruck, deren zugehöriges Druckbild keine Weißbereiche aufweist.

In einer weiteren bevorzugten Ausführungsform des Verfahrens wird mindestens eine Aktion durchgeführt, welche zu einer Verringerung der optischen Wahrnehmbarkeit der mindestens einen Sektionsgrenze im späteren Druckbild führt. Die mindestens eine durchgeführte Aktion kann insbesondere das Unterteilen des Gravurbilds betreffen. Beispielsweise betrifft die mindestens eine durchgeführte Aktion die Definition der mindestens einen Sektionsgrenze. Jedoch sind auch andere Aktionen denkbar, welche nicht die die Definition der mindestens einen Sektionsgrenze betreffen. Durch das Durchführen der mindestens einen Aktion, welche zu einer Verringerung der optischen Wahrnehmbarkeit der mindestens einen Sektionsgrenze im späteren Druckbild führt, wird erreicht, dass der Verlauf der mindestens einen Sektionsgrenze im späteren Druckbild nicht so leicht für das menschliche Auge erkennbar ist.

In einer weiteren bevorzugten Ausführungsform des Verfahrens wird entlang mindestens eines Abschnitts der mindestens einen Sektionsgrenze, in welchem die mindestens eine Sektionsgrenze durch einen Gravurbereich des Gravurbilds verläuft, ein die Sektionsgrenze umgebender Überlappungsbereich definiert, in dem sich die beiden aneinandergrenzenden Bildsektionen überlappen. Beim Gravieren der Oberfläche der Druckform wird der Überlappungsbereich von beiden Lasergraviereinheiten, die den beiden aneinandergrenzenden Bildsektionen jeweils zugeordnet sind, graviert. Hierdurch kann erreicht werden, dass der Verlauf der mindestens einen Sektionsgrenze im späteren Druckbild nicht so leicht für das menschliche Auge erkennbar ist, beispielsweise wenn die Eigenschaften der einzelnen Lasergraviereinheiten aufgrund von Fertigungstoleranzen nicht perfekt identisch sind, oder wenn Ungenauigkeiten bei der Positionierung der Lasergraviereinheiten bestehen.

In einer weiteren bevorzugten Ausführungsform des Verfahrens findet in mindestens einem Teilbereich des Überlappungsbereichs, welcher innerhalb eines Gravurbereichs des Gravurbilds liegt, ein gradueller Übergang zwischen den Gravurtiefen der beiden Lasergraviereinheiten statt. Unter einer Gravurtiefe einer Lasergraviereinheit wird hierbei der von dieser Lasergraviereinheit bewirkte Materialabtrag in einer Richtung senkrecht und/oder tangential zur gravierten Oberfläche der Druckform verstanden. Die Gravurtiefe lässt sich beispielsweise über die Intensität des Lasers, über die Wellenlänge des Lasers, über die Leistung des Lasers, oder auch über die Bestrahldauer der Oberfläche der Druckform variieren. Unter einem graduellen Übergang der Gravurtiefen der beiden Lasergraviereinheiten im Überlappungsbereich wird verstanden, dass die Gravurtiefe des ersten Lasers innerhalb des Überlappungsbereichs allmählich abnimmt und die Gravurtiefe des zweiten Lasers entsprechend zunimmt. Beispielsweise kann es sich um einen kontinuierlichen oder auch um einen schrittweisen graduellen Übergang handeln. Vorzugsweise bleibt die gesamte Gravurtiefe, d.h. die Summe der Gravurtiefen beider Lasergraviereinheiten dabei konstant. Dadurch, dass mindestens einem Teilbereich des Überlappungsbereichs, welcher innerhalb eines Gravurbereichs des Gravurbilds liegt, ein gradueller Übergang zwischen den Gravurtiefen der beiden Lasergraviereinheiten stattfindet, kann in einem Vollgravurbereich des Gravurbilds vermieden werden, dass entlang der Sektionsgrenze erhabene Bereiche entstehen, die im späteren Druckbild zu einem Farbabtrag auf den Bedruckstoff innerhalb eines Weißbereichs und somit zu einer direkten optischen Wahrnehmbarkeit der Sektionsgrenze führen können. In einem Rastergravurbereich des Gravurbilds kann ein gleichmäßigerer Übergang zwischen den beiden aneinandergrenzenden Bildsektionen erreicht werden, sodass der Verlauf der mindestens einen Sektionsgrenze im späteren Druckbild nicht so leicht für das menschliche Auge erkennbar ist.

In einer weiteren bevorzugten Ausführungsform des Verfahrens wird in mindestens einem Teilbereich des Überlappungsbereichs, welcher innerhalb eines Rastergravurbereichs des Gravurbilds liegt, mindestens ein vertieftes Element der Oberfläche der Druckform, welches innerhalb einer der beiden aneinandergrenzenden Bildsektionen des Gravurbilds liegt, von derjenigen Lasergraviereinheit graviert, welche der jeweils anderen Bildsektion zugeordnet ist. Bei dem vertieften Element der Oberfläche der Druckform kann es sich, falls die Druckform für den Tiefdruck bestimmt ist, beispielsweise um eine druckende Vertiefung der Oberfläche der Druckform handeln. Ferner kann es sich bei dem vertieften Element der Oberfläche der Druckform, falls die Druckform für den Flexodruck bestimmt ist, beispielsweise um ein nicht druckendes vertieftes Element eines Rastergravurbereichs handeln. Dadurch, dass mindestens ein vertieftes Element, welches innerhalb einer der beiden aneinandergrenzenden Bildsektionen des Gravurbilds liegt, von derjenigen Lasergraviereinheit graviert wird, welche der jeweils anderen Bildsektion zugeordnet ist, kann ein gleichmäßigerer Übergang zwischen den beiden aneinandergrenzenden Bildsektionen erreicht werden, sodass der Verlauf der mindestens einen Sektionsgrenze im späteren Druckbild nicht so leicht für das menschliche Auge erkennbar ist. Dies gilt insbesondere dann, wenn die Eigenschaften der einzelnen Lasergraviereinheiten aufgrund von Fertigungstoleranzen nicht perfekt identisch sind, oder wenn Ungenauigkeiten bei der Positionierung der Lasergraviereinheiten bestehen.

Der Überlappungsbereich kann beispielsweise eine Breite von bis zu 200 mm, bevorzugt im Bereich 0,1 mm bis 50 mm, besonders bevorzugt im Bereich von 0,5 mm bis 20 mm in einer Richtung senkrecht und/oder tangential zum Verlauf der Sektionsgrenze aufweisen. Diese Breite ist ausreichend, um die soeben beschriebenen Effekte zu erzielen. Geringere Breiten führen zu einer größeren Zeitersparnis bei der simultanen Gravur mit mehreren Lasergraviereinheiten. Hingegen verringern größere Breiten die optische Wahrnehmbarkeit der mindestens einen Sektionsgrenze im späteren Druckbild.

In einer weiteren bevorzugten Ausführungsform des Verfahrens wird die mindestens eine Sektionsgrenze so definiert, dass die Länge der direkten Verbindungslinie zwischen dem Punkt, an dem die mindestens eine Sektionsgrenze in einen Gravurbereich eindringt, und dem Punkt, an dem die mindestens eine Sektionsgrenze aus diesem Gravurbereich austritt, gegenüber der maximal möglichen Länge reduziert wird. Vorzugsweise wird die Länge der direkten Verbindungslinie auf ein Minimum reduziert. Durch die Reduzierung der Länge der direkten Verbindungslinie, vorzugsweise auf ein Minimum, kann erreicht werden, dass die mindestens eine Sektionsgrenze, bezogen auf ihre gesamte Länge, nur in relativ kurzen Abschnitten durch einen Gravurbereich verläuft, sodass die optische Wahrnehmbarkeit der mindestens einen Sektionsgrenze im späteren Druckbild verringert wird.

In einer weiteren bevorzugten Ausführungsform des Verfahrens wird in mindestens einem Abschnitt der mindestens einen Sektionsgrenze, in welchem die mindestens eine Sektionsgrenze durch einen Rastergravurbereich des Gravurbilds verläuft, die mindestens eine Sektionsgrenze so definiert, dass die mindestens eine Sektionsgrenze gebogen, gewellt, gezackt und/oder auf sonstige Weise abweichend von einer durchgängigen geraden Linie verläuft. Als durchgängige gerade Linie wird in diesem Zusammenhang eine gerade Linie verstanden, die einen zusammenhängenden Rastergravurbereich vollständig durchquert, ohne dabei eine Richtungsänderung vorzunehmen. Sektionsgrenzen, die innerhalb eines Rastergravurbereich entlang einer durchgängigen geraden Linie verlaufen, sind im späteren Druckbild vergleichsweise leicht für das menschliche Auge erkennbar. Dadurch, dass die mindestens eine Sektionsgrenze in mindestens einem Abschnitt der mindestens einen Sektionsgrenze gebogen, gewellt, gezackt und/oder auf sonstige Weise abweichend von einer durchgängigen geraden Linie durch einen Rastergravurbereich des Gravurbilds verläuft, kann folglich erreicht werden, dass die optische Wahrnehmbarkeit der mindestens einen Sektionsgrenze im späteren Druckbild verringert wird.

In einer weiteren bevorzugten Ausführungsform des Verfahrens wird in mindestens einem Abschnitt der mindestens einen Sektionsgrenze, in welchem die mindestens eine Sektionsgrenze durch einen Rastergravurbereich des Gravurbilds verläuft, die mindestens eine Sektionsgrenze so definiert, dass die mindestens eine Sektionsgrenze entlang einer inneren Kontur des Rastergravurbereichs verläuft. Unter einer inneren Kontur eines Rastergravurbereichs wird in diesem Zusammenhang ein abrupter Übergang innerhalb eines Rastergravurbereichs zwischen zwei Bereichen mit unterschiedlicher Rasterung verstanden. Im Flexodruck kann eine innere Kontur eines Rastergravurbereichs beispielsweise durch einen Übergang von einem Bereich, in dem die Größe und/oder der Abstand der Rasterpunkte zur Erzeugung einer ersten Halbtonfarbe jeweils einen ersten Wert annimmt, in einen Bereich, in dem die Größe und/oder der Abstand der Rasterpunkte zur Erzeugung einer zweiten Halbtonfarbe jeweils einen zweiten Wert annimmt, gebildet werden. Daneben sind jedoch auch Variationen in Bezug auf beliebige andere Parameter der Rasterung denkbar. Im Tiefdruck kann eine innere Kontur eines Rastergravurbereichs beispielsweise auch durch einen Übergang von einem Bereich, in dem die Aussparungstiefe der druckenden Vertiefungen zur Erzeugung eines ersten Farbauftrags einen ersten Wert annimmt, in einen Bereich, in dem die Aussparungstiefe der druckenden Vertiefungen zur Erzeugung eines zweiten Farbauftrags einen zweiten Wert annimmt, gebildet werden. Dadurch, dass die mindestens eine Sektionsgrenze in mindestens einem Abschnitt der mindestens einen Sektionsgrenze entlang einer inneren Kontur des Rastergravurbereichs verläuft, wird erreicht, dass die optische Wahrnehmbarkeit der mindestens einen Sektionsgrenze im späteren Druckbild verringert wird. Dies ist dadurch begründet, dass die innere Kontur des Rastergravurbereichs ohnehin als eine Art Grenze wahrgenommen wird, sodass der Verlauf der mindestens einen Sektionsgrenze entlang der inneren Kontur optisch nicht so stark auffällt.

In einer weiteren bevorzugten Ausführungsform des Verfahrens wird die mindestens eine Sektionsgrenze in mindestens einem Abschnitt der mindestens einen Sektionsgrenze so definiert, dass die mindestens eine Sektionsgrenze entlang eines Rands zwischen einem Gravurbereich und einem Freibereich oder entlang eines Rands zwischen einem Vollgravurbereich und einem Rastergravurbereich verläuft. Im erstgenannten Fall kann der Gravurbereich ein Vollgravurbereich oder ein Rastergravurbereich sein. Ebenso wie Konturen innerhalb eines Rastergravurbereichs werden auch die genannten Ränder vom menschlichen Auge ohnehin als eine Art Grenze wahrgenommen. Dadurch, dass die mindestens eine Sektionsgrenze in mindestens einem Abschnitt der mindestens einen Sektionsgrenze entlang eines Rands zwischen einem Gravurbereich und einem Freibereich oder entlang eines Rands zwischen einem Vollgravurbereich und einem Rastergravurbereich verläuft, wird somit erreicht, dass die optische Wahrnehmbarkeit der mindestens einen Sektionsgrenze im späteren Druckbild verringert wird.

In einer weiteren bevorzugten Ausführungsform des Verfahrens wird die mindestens eine Sektionsgrenze in mindestens einem Abschnitt der mindestens einen Sektionsgrenze basierend auf einer Benutzereingabe definiert. Beispielsweise kann ein Benutzer den Verlauf der mindestens einen Sektionsgrenze zumindest abschnittsweise selbst definieren. Ebenso ist es denkbar, dass dem Benutzer mögliche Verläufe der mindestens einen Sektionsgrenze auf einer Anzeigeeinheit angezeigt werden, wobei der Benutzer einen der angezeigten Verläufe durch eine geeignete Benutzereingabe auswählt. Dadurch, dass die mindestens eine Sektionsgrenze in mindestens einem Abschnitt der mindestens einen Sektionsgrenze basierend auf einer Benutzereingabe definiert wird, wird erreicht, dass ein Benutzer, welcher das Verfahren initiiert oder steuert, Einfluss auf die Definition der mindestens einen Sektionsgrenze nehmen kann. Beispielsweise kann der Benutzer die mindestens eine Sektionsgrenze so definieren, dass die mindestens eine Sektionsgrenze im späteren Druckbild nicht so leicht für das menschliche Auge erkennbar ist.

In einer weiteren bevorzugten Ausführungsform des Verfahrens ist das Verfahren derart ausgestaltet, dass mindestens eine der folgenden Bedingungen erfüllt ist:
- entlang mindestens eines Abschnitts der mindestens einen Sektionsgrenze, in welchem die mindestens eine Sektionsgrenze durch einen Gravurbereich des Gravurbilds verläuft, wird ein die Sektionsgrenze umgebender Überlappungsbereich definiert, in dem sich die beiden aneinandergrenzenden Bildsektionen überlappen, wobei beim Gravieren der Oberfläche der Druckform der Überlappungsbereich von beiden Lasergraviereinheiten, die den beiden aneinandergrenzenden Bildsektionen jeweils zugeordnet sind, graviert wird;
- die mindestens eine Sektionsgrenze wird so definiert, dass die Länge der direkten Verbindungslinie zwischen dem Punkt, an dem die mindestens eine Sektionsgrenze in einen Gravurbereich eindringt, und dem Punkt, an dem die mindestens eine Sektionsgrenze aus diesem Gravurbereich austritt, gegenüber der maximal möglichen Länge reduziert wird;
- in mindestens einem Abschnitt der mindestens einen Sektionsgrenze, in welchem die mindestens eine Sektionsgrenze durch einen Rastergravurbereich des Gravurbilds verläuft, wird die mindestens eine Sektionsgrenze so definiert, dass die mindestens eine Sektionsgrenze gebogen, gewellt, gezackt und/oder auf sonstige Weise abweichend von einer durchgängigen geraden Linie verläuft;
- in mindestens einem Abschnitt der mindestens einen Sektionsgrenze, in welchem die mindestens eine Sektionsgrenze durch einen Rastergravurbereich des Gravurbilds verläuft, wird die mindestens eine Sektionsgrenze so definiert, dass die mindestens eine Sektionsgrenze entlang einer inneren Kontur des Rastergravurbereichs verläuft;
- in mindestens einem Abschnitt der mindestens einen Sektionsgrenze wird die mindestens eine Sektionsgrenze so definiert, dass die mindestens eine Sektionsgrenze entlang eines Rands zwischen einem Gravurbereich und einem Freibereich oder entlang eines Rands zwischen einem Vollgravurbereich und einem Rastergravurbereich verläuft;
- die mindestens eine Sektionsgrenze wird in mindestens einem Abschnitt der mindestens einen Sektionsgrenze basierend auf einer Benutzereingabe definiert.

Das Einhalten jeder einzelnen der genannten Bedingungen bewirkt für sich, dass die optische Wahrnehmbarkeit der mindestens einen Sektionsgrenze im späteren Druckbild verringert wird, wie den bisherigen Ausführungen zu entnehmen ist. Dabei ist es jedoch bereits ausreichend, dass mindestens eine Bedingung erfüllt ist, um den genannten Effekt zu erzielen. Prinzipiell können jedoch auch mindestens zwei, mindestens drei, oder mehr als drei der genannten Bedingungen erfüllt sein. Je mehr Bedingungen gleichzeitig eingehalten werden, umso stärker wird die optische Wahrnehmbarkeit der mindestens einen Sektionsgrenze im späteren Druckbild verringert.

In einer weiteren bevorzugten Ausführungsform des Verfahrens wird eine Darstellung des Gravurbilds zusammen mit einer Darstellung der mindestens einen Sektionsgrenze oder zumindest zusammen mit einer Darstellung eines vorläufigen Verlaufs der mindestens einen Sektionsgrenze auf mindestens einer Anzeigeeinheit angezeigt. Hierdurch wird es einem Benutzer erleichtert, das Verfahren zu steuern. Insbesondere wird die Definition der mindestens einen Sektionsgrenze für den Benutzer vereinfacht, wenn der Benutzer über die mindestens eine Anzeigeeinheit eine optische Rückmeldung über das Gravurbild und die mindestens eine Sektionsgrenze oder zumindest einen vorläufigen Verlauf der mindestens einen Sektionsgrenze erhält.

In einer weiteren bevorzugten Ausführungsform des Verfahrens sind die mindestens zwei Lasergraviereinheiten in mindestens eine Raumrichtung unabhängig voneinander bewegbar. Die mindestens eine Raumrichtung ist insbesondere eine Axialrichtung einer zylindrischen Druckform. Durch die unabhängige Bewegbarkeit der mindestens zwei Lasergraviereinheiten in mindestens eine Raumrichtung wird erreicht, dass die mindestens zwei Lasergraviereinheiten beim Gravieren der Druckform die jeweiligen Bildsektionen unabhängig voneinander gravieren können. Beispielsweise kann jede Lasergraviereinheit innerhalb der von ihr zu bearbeitenden Bildsektion auftretende Freibereiche unabhängig von den jeweils anderen Lasergraviereinheiten in Axialrichtung überfahren, sodass insgesamt eine Verkürzung der Gravurzeit erreicht werden kann.

In einer weiteren bevorzugten Ausführungsform des Verfahrens umfasst jede der mindestens zwei Lasergraviereinheiten mindestens eine eigene Laserquelle. Unter einer eigenen Laserquelle wird in diesem Zusammenhang eine physisch eigenständige Laserquelle verstanden, die ausschließlich der betreffenden Lasergraviereinheit zugeordnet ist und gemeinsam mit dieser Lasergraviereinheit unabhängig bewegt werden kann. Ferner umfasst jede der mindestens zwei Lasergraviereinheiten in dieser Ausführungsform mindestens einen eigenen Modulator. Unter einem eigenen Modulator wird in diesem Zusammenhang ein physisch eigenständiger Modulator verstanden, der ausschließlich der betreffenden Lasergraviereinheit zugeordnet ist und gemeinsam mit dieser Lasergraviereinheit unabhängig bewegt werden kann. Dadurch, dass jede der mindestens zwei Lasergraviereinheiten mindestens eine eigene Laserquelle und mindestens einen eigenen Modulator umfasst, wird erreicht, dass die mindestens zwei Lasergraviereinheiten beim Gravieren der Oberfläche der Druckform die jeweiligen Bildsektionen unabhängig voneinander gravieren können, womit insgesamt eine Verkürzung der Gravurzeit erreicht werden kann.

In einer weiteren bevorzugten Ausführungsform des Verfahrens sind die Laserquellen der mindestens zwei Lasergraviereinheiten Fiber-Laserquellen. Hierdurch lassen sich eine hohe Strahlqualität sowie ein nahezu wartungsfreier Aufbau der Laserquellen erreichen.

In einer alternativen Ausführungsform des Verfahrens sind die Laserquellen der mindestens zwei Lasergraviereinheiten CO₂-Laserquellen. Hierdurch lassen sich auch Materialien wie beispielsweise Silikone gravieren, die nicht von Fiber-Lasern graviert werden können.

In einer weiteren bevorzugten Ausführungsform des Verfahrens sind die Modulatoren der mindestens zwei Lasergraviereinheiten akustooptische Modulatoren. Hierdurch lässt sich eine besonders präzise Modulation des Laserstrahls und damit ein entsprechend akkurates Gravurergebnis bei der Gravur der Druckform erzielen.

In einer weiteren bevorzugten Ausführungsform des Verfahrens umfasst jede der mindestens zwei Lasergraviereinheiten mindestens eine Linse. Insbesondere umfasst jede der mindestens zwei Lasergraviereinheiten mindestens eine eigene Linse. Unter einer eigenen Linse wird in diesem Zusammenhang eine physisch eigenständige Linse verstanden, die ausschließlich der betreffenden Lasergraviereinheit zugeordnet ist und gemeinsam mit dieser Lasergraviereinheit unabhängig bewegt werden kann. Durch die Verwendung von Linsen in den Lasergraviereinheiten lässt sich die Auflösung der Gravurbilder erhöhen und damit die Schärfe des Gravurergebnisses verbessern. Durch die Verwendung von eigenen Linsen für jeder der mindestens zwei Lasergraviereinheiten wird erreicht, dass die mindestens zwei Lasergraviereinheiten beim Gravieren der Druckform die jeweiligen Bildsektionen unabhängig voneinander gravieren können, womit insgesamt eine Verkürzung der Gravurzeit erreicht werden kann.

In einer weiteren bevorzugten Ausführungsform des Verfahrens sind die mindestens zwei Lasergraviereinheiten im Wesentlichen identisch. Hierunter wird verstanden, dass die mindestens zwei Lasergraviereinheiten denselben Aufbau mit denselben Komponenten aufweisen, und dass sich ihre Eigenschaften nur durch nicht vermeidbare Abweichungen wie beispielsweise Fertigungstoleranzen unterscheiden. Dadurch, dass die mindestens zwei Lasergraviereinheiten im Wesentlichen identisch sind, kann ein besonders gleichmäßiges Gravurergebnis erreicht werden. Insbesondere kann dadurch auch erreicht werden, dass Sektionsgrenzen zwischen einzelnen Bildsektionen des Gravurbilds im späteren Druckbild nicht so leicht für das menschliche Auge erkennbar sind.

In einer weiteren bevorzugten Ausführungsform des Verfahrens wird eine Druckform für den Flexodruck hergestellt. In einer alternativen Ausführungsform des Verfahrens wird eine Druckform für den Tiefdruck hergestellt. Sowohl beim Flexodruck als auch beim Tiefdruck lässt sich unabhängig von der Beschaffenheit des zu erzeugenden Gravurbilds eine Verkürzung der Gravurzeit bei der Verwendung mehrerer Lasergraviereinheiten erzielen.

In einer weiteren bevorzugten Ausführungsform des Verfahrens besteht die zu gravierende Oberfläche der Druckform zumindest teilweise aus Gummi. Vorzugsweise besteht die zu gravierende Oberfläche der Druckform vollständig aus Gummi. Insbesondere im Flexodruck ist Gummi als Material für die zu gravierende Oberfläche der Druckform verbreitet und erfüllt die hier geltenden Anforderungen. Dadurch, dass die zu gravierende Oberfläche der Druckform zumindest teilweise, vorzugsweise vollständig aus Gummi besteht, lassen sich mit dem erfindungsgemäßen Verfahren entsprechende Druckformen für den Flexodruck herstellen.

In einer alternativen Ausführungsform des Verfahrens besteht die zu gravierende Oberfläche der Druckform zumindest teilweise aus Metall oder Kunststoff. Vorzugsweise besteht die zu gravierende Oberfläche der Druckform vollständig aus Metall oder Kunststoff. Im Falle eines Metalls handelt es sich insbesondere um Kupfer, Chrom oder Zink. Insbesondere im Tiefdruck ist Metall, insbesondere Kupfer, Chrom oder Zink, und Kunststoff als Material für die zu gravierende Oberfläche der Druckform verbreitet und erfüllt die hier geltenden Anforderungen. Dadurch, dass die zu gravierende Oberfläche der Druckform zumindest teilweise, vorzugsweise vollständig aus Metall oder Kunststoff besteht, lassen sich mit dem erfindungsgemäßen Verfahren entsprechende Druckformen für den Tiefdruck herstellen.

In einer weiteren bevorzugten Ausführungsform des Verfahrens ist die Druckform ein Sleeve. Hierunter wird eine zylindrische Hülse verstanden, deren äußere Mantelfläche mittels Lasergravur graviert wird und im späteren Druck als druckende Oberfläche fungiert. Sowohl im Flexodruck als auch im Tiefdruck sind Sleeves als Druckformen weit verbreitet. Dadurch, dass die Druckform ein Sleeve ist, lassen sich mit dem erfindungsgemäßen Verfahren entsprechende Druckformen herstellen.

In einer alternativen Ausführungsform des Verfahrens ist die Druckform ein Druckzylinder. Hierunter wird ein zylindrischer Körper verstanden, dessen äußere Mantelfläche mittels Lasergravur graviert wird und im späteren Druck als druckende Oberfläche fungiert. Auch Druckzylinder sind sowohl im Flexodruck als auch im Tiefdruck immer noch verbreitet. Dadurch, dass die Druckform ein Druckzylinder ist, lassen sich mit dem erfindungsgemäßen Verfahren entsprechende Druckformen herstellen.

In einer weiteren alternativen Ausführungsform des Verfahrens ist die Druckform mindestens eine flexible Druckplatte, die auf einem Fixierzylinder fixiert ist. Die Fixierung der mindestens einen flexiblen Druckplatte auf dem Fixierzylinder kann beispielsweise stoffschlüssig, magnetisch und/oder mittels Unterdruck erfolgen. Die auf diese Weise fixierte flexible Druckplatte weist dadurch eine äußere Oberfläche auf, welche für den Zweck des Gravierens der äußeren Mantelfläche einer zylindrischen Druckform entspricht. Der spätere Druck erfolgt dann üblicherweise in ebener Geometrie, was bedeutet, dass die mindestens eine Druckplatte hier beispielsweise nicht mehr auf einem Fixierzylinder fixiert ist. Dadurch, dass die Druckform mindestens eine flexible Druckplatte ist, die auf einem Fixierzylinder fixiert ist, lässt sich das erfindungsgemäße Verfahren auch für die Herstellung von Druckplatten benutzen, welche insbesondere im Flexodruck ebenfalls verbreitet sind.

Im Rahmen der ersten Lehre wird auch ein Verfahren zur Herstellung von mindestens zwei zusammengehörigen Druckformen für einen Mehrfarbdruck angegeben. Dabei wird jeder der mindestens zwei zusammengehörigen Druckformen durch das bisher beschriebene Verfahren gemäß der ersten Lehre hergestellt, wobei zumindest in Bereichen, in denen sich beim Übereinanderlegen der auf den jeweiligen Oberflächen der Druckformen zu erzeugenden Gravurbilder die Gravurbereiche von mindestens zwei Gravurbildern überlappen, die mindestens eine Sektionsgrenze jedes an der Überlappung beteiligten Gravurbilds so definiert wird, dass die mindestens eine Sektionsgrenze zumindest abschnittsweise nicht deckungsgleich mit einer Sektionsgrenze eines anderen an der Überlappung beteiligten Gravurbilds ist. Bei einem Mehrfarbdruck entsteht das fertige mehrfarbige Druckbild dadurch, dass sich die Druckbilder mehrerer Farben überlagern. Falls dabei mehrere Sektionsgrenzen der jeweiligen Gravurbilder innerhalb eines Gravurbereichs zur Deckung kommen, kann dies im späteren Druckbild vergleichsweise einfach optisch erkennbar sein. Dadurch, dass zumindest in Bereichen, in denen sich beim Übereinanderlegen der auf den jeweiligen Oberflächen der Druckformen zu erzeugenden Gravurbilder die Gravurbereiche von mindestens zwei Gravurbildern überlappen, die mindestens eine Sektionsgrenze jedes an der Überlappung beteiligten Gravurbilds so definiert wird, dass die mindestens eine Sektionsgrenze zumindest abschnittsweise nicht deckungsgleich mit einer Sektionsgrenze eines anderen an der Überlappung beteiligten Gravurbilds ist, wird folglich erreicht, dass die optische Wahrnehmbarkeit der mindestens einen Sektionsgrenze im späteren Druckbild verringert wird. Dies gilt insbesondere dann, wenn es sich bei den genannten Gravurbereichen um Rastergravurbereiche handelt.

Gemäß einer zweiten Lehre der Erfindung wird die oben genannte Aufgabe durch eine Vorrichtung oder ein System zur Herstellung einer Druckform mittels Lasergravur gelöst. Die Vorrichtung oder das System umfasst hierbei:
- Mittel zum Unterteilen eines auf einer Oberfläche der Druckform zu erzeugenden Gravurbilds in mindestens zwei Bildsektionen durch Definition mindestens einer Sektionsgrenze zwischen den mindestens zwei Bildsektionen;
- Mittel zum Gravieren der Oberfläche der Druckform unter Verwendung von mindestens zwei Lasergraviereinheiten, wobei die Mittel zum Gravieren der Oberfläche der Druckform dazu konfiguriert sind, dass jede der mindestens zwei Bildsektionen von einer der mindestens zwei Lasergraviereinheiten simultan graviert wird.

Die Lösung der Aufgabe erfolgt für eine solche Vorrichtung oder ein solches System dadurch, dass die Mittel zum Unterteilen des Gravurbilds dazu konfiguriert sind, die mindestens eine Sektionsgrenze so zu definieren, dass mindestens ein Abschnitt der mindestens einen Sektionsgrenze durch einen Gravurbereichs des Gravurbilds verläuft.

Beispielsweise ist die Vorrichtung gemäß der zweiten Lehre eine Lasergraviermaschine mit integrierter Recheneinheit. Beispielsweise ist das System gemäß der zweiten Lehre eine Lasergraviermaschine, die mit einer externen Recheneinheit verbunden ist. Die externe Recheneinheit kann ein Steuerungscomputer sein. Beispielsweise umfassen die Mittel zum Unterteilen des Gravurbilds einen Prozessor, insbesondere einen Prozessor der integrierten oder externen Recheneinheit. Beispielsweise umfassen die Mittel zum Gravieren der Oberfläche der Druckform mindestens zwei Lasergraviereinheiten, Mittel zum Positionieren der mindestens zwei Lasergraviereinheiten relativ zur Oberfläche der Druckform, sowie Steuermittel. In einem beispielhaften Fall, in dem die Druckform eine zylindrische Form aufweist, umfassen die Mittel zum Positionieren beispielsweise einen Motor, der die Druckform um eine Längsachse dreht, sodass auf diese Weise die mindestens zwei Lasergraviereinheiten in Umfangsrichtung relativ zu einer äußeren Mantelfläche der Druckform positioniert werden. Ferner umfassen die Mittel zum Positionieren beispielsweise mindestens zwei Längsantriebe, welche die mindestens zwei Lasergraviereinheiten parallel zu einer Axialrichtung der Druckform verschieben, sodass auf diese Weise die mindestens zwei Lasergraviereinheiten in Axialrichtung relativ zu einer äußeren Mantelfläche der Druckform positioniert werden. Beispielsweise umfassen die Steuermittel mindestens einen Prozessor, insbesondere einen Prozessor der integrierten oder externen Recheneinheit, sowie mindestens eine Steuereinheit der Lasergraviermaschine, welche die Lasergraviereinheiten, den Motor sowie den Längsantrieb derart ansteuert, dass die Druckform entsprechend des zu erzeugenden Gravurbilds graviert wird.

Wie bereits in Zusammenhang mit der ersten Lehre ausgeführt wurde, lässt sich dadurch, dass mindestens ein Abschnitt der mindestens einen Sektionsgrenze durch einen Gravurbereichs des Gravurbilds verläuft, insgesamt erreichen, dass unabhängig von der Beschaffenheit des zu erzeugenden Gravurbilds die Gravurzeit bei der Verwendung mehrerer Lasergraviereinheiten verkürzt werden kann.

Insbesondere führt die Vorrichtung oder das System gemäß der zweiten Lehre ein Verfahren gemäß der ersten Lehre durch und ist zur Durchführung eines solchen Verfahrens konfiguriert. Sämtliche im Rahmen der ersten Lehre beschriebenen Verfahrensmerkmale sollen hiermit auch für die Vorrichtung oder das System gemäß der zweiten Lehre als offenbart gelten. Dies ist so zu verstehen, dass die Vorrichtung oder das System gemäß der zweiten Lehre zur Realisierung der im Rahmen der ersten Lehre beschriebenen Verfahrensmerkmale konfiguriert ist und/oder Mittel zur Realisierung der im Rahmen der ersten Lehre beschriebenen Verfahrensmerkmale aufweist.

In einer bevorzugten Ausführungsform der Vorrichtung oder des Systems umfasst die Vorrichtung oder das System Mittel zur zumindest abschnittsweisen Definition der mindestens einen Sektionsgrenze basierend auf einer Benutzereingabe. Hierdurch wird erreicht, dass ein Benutzer, welcher das Verfahren initiiert oder steuert, Einfluss auf die Definition der mindestens einen Sektionsgrenze nehmen kann, wie bereits in Zusammenhang mit der ersten Lehre ausgeführt wurde.

In einer weiteren bevorzugten Ausführungsform der Vorrichtung oder des Systems umfasst die Vorrichtung oder das System ferner Mittel zur Darstellung des Gravurbilds zusammen mit einer Darstellung der mindestens einen Sektionsgrenze oder zumindest zusammen mit einer Darstellung eines vorläufigen Verlaufs der mindestens einen Sektionsgrenze auf mindestens einer Anzeigeeinheit. Hierdurch wird es einem Benutzer erleichtert, das Verfahren gemäß der ersten Lehre zu steuern, wenn es von der Vorrichtung oder dem System gemäß der zweiten Lehre ausgeführt wird.

In einer weiteren bevorzugten Ausführungsform der Vorrichtung oder des Systems umfasst die Vorrichtung oder das System ferner mindestens eine eigene Laserquelle und mindestens einen eigenen Modulator für jede der mindestens zwei Lasergraviereinheiten. Hierdurch wird erreicht, dass die mindestens zwei Lasergraviereinheiten beim Gravieren der Oberfläche der Druckform die jeweiligen Bildsektionen unabhängig voneinander gravieren können, womit insgesamt eine Verkürzung der Gravurzeit erreicht werden kann, wie bereits in Zusammenhang mit dem Verfahren gemäß der ersten Lehre ausgeführt wurde.

Gemäß einer dritten Lehre der Erfindung wird die oben genannte Aufgabe für ein Computerprogrammprodukt dadurch gelöst, dass das Computerprogrammprodukt Befehle umfasst, die bei der Ausführung des Programms durch einen Prozessor eine Vorrichtung oder ein System gemäß der zweiten Lehre dazu veranlassen, ein Verfahren gemäß der ersten Lehre auszuführen. Der Prozessor kann beispielsweise ein Prozessor einer integrierten Recheneinheit innerhalb einer Vorrichtung gemäß der zweiten Lehre oder ein Prozessor einer externen Recheneinheit innerhalb eines Systems gemäß der zweiten Lehre sein. Wie bereits ausgeführt bewirkt die Ausführung des Verfahrens gemäß der ersten Lehre durch eine Vorrichtung oder ein System gemäß der zweiten Lehre, dass unabhängig von der Beschaffenheit des zu erzeugenden Gravurbilds die Gravurzeit durch Verwendung mehrerer Lasergraviereinheiten verkürzt werden kann.

Gemäß einer vierten Lehre der Erfindung wird die oben genannte Aufgabe für eine Verwendung einer Druckform dadurch gelöst, dass mindestens eine durch ein Verfahren gemäß der ersten Lehre hergestellte Druckform für den Verpackungs-, Etiketten-, Dekor- und/oder Zeitschriftendruck verwendet wird. Der Verpackungsdruck umfasst in diesem Zusammenhang insbesondere das Bedrucken von Lebensmittel- und Getränkeverpackungen, der Etikettendruck insbesondere das Drucken von Etiketten für Lebensmittel- und Getränkeverpackungen. Unter den Dekordruck fällt beispielsweise das Bedrucken von Klebefolien, Servietten, Tapeten und Latexballons. Der Zeitschriftendruck umfasst insbesondere auch den Zeitungsdruck. Für die genannten Druckanwendungen ist es üblich, das Gravurbild der Druckform in mehrere Bildsektionen zu unterteilen. Jedoch konnten die Sektionsgrenzen bei der simultanen Gravur durch mehrere Lasergraviereinheiten bisher nur durch Freibereiche des Gravurbilds gelegt werden, sodass die realisierte Zeitersparnis unter anderem von der Beschaffenheit des Gravurbilds abhängig war. Dadurch, dass die durch ein Verfahren gemäß der ersten Lehre hergestellten Druckformen für den Verpackungs-, Etiketten-, Dekor- und/oder Zeitschriftendruck verwendet werden, kann folglich bei diesen Druckanwendungen eine Verkürzung der Gravurzeit nun unabhängig von der Beschaffenheit des zu erzeugenden Gravurbilds erreicht werden.

Im Folgenden soll die Erfindung anhand von Ausführungsbeispielen näher erläutert werden, wobei auch auf die Zeichnung Bezug genommen wird. Die Zeichnung zeigt in
- Fig. 1: ein schematisches Flussdiagramm eines Verfahrens gemäß der ersten Lehre der Erfindung,
- Fig. 2: eine schematische Darstellung einer Vorrichtung gemäß der zweiten Lehre der Erfindung,
- Fig. 3A bis 3I: eine schematische Darstellung eines Überlappungsbereichs gemäß einer bevorzugten Ausführungsform der Erfindung (Fig. 3A), sowie beispielhafte Gravurtiefen von zwei Lasergravureinheiten für diesen Gravurbereich (Fig. 3B, 3D, 3F, 3H) und die hieraus resultieren Gravurprofile der Druckform (Fig. 3C, 3E, 3G, 3I),
- Fig. 4A und 4B: eine schematische Darstellung eines Überlappungsbereichs gemäß einer weiteren bevorzugten Ausführungsform (Fig. 4A), sowie eine beispielhafte Zuordnung von vertieften Elementen der Oberfläche der Druckform zu zwei verschiedenen Lasergraviereinheiten (Fig. 4B),
- Fig. 5A bis 5E: jeweils schematische Darstellungen von auf verschiedene Art und Weise definierten Sektionsgrenzen gemäß bevorzugten Ausführungsformen der Erfindung, und
- Fig. 6: eine schematische Darstellung von vier übereinandergelegten Gravurbildern für einen Mehrfarbdruck inklusive der jeweils definierten Sektionsgrenzen gemäß der ersten Lehre der Erfindung.

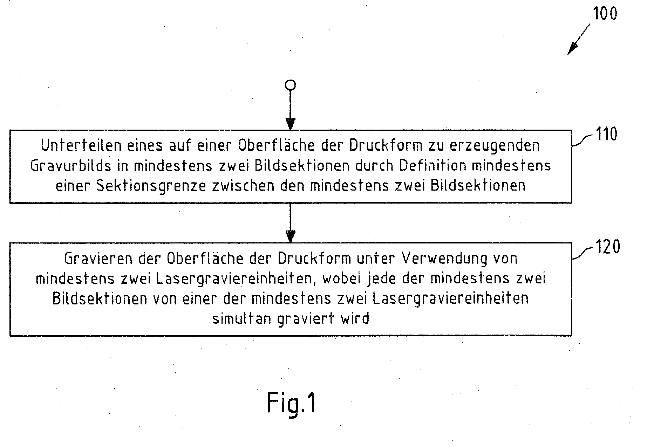

Fig. 1 zeigt ein schematisches Flussdiagramm eines Verfahrens gemäß der ersten Lehre der Erfindung. Das dargestellte Verfahren umfasst einen Schritt (110), in dem das auf einer Oberfläche einer Druckform zu erzeugende Gravurbild in mindestens zwei Bildsektionen unterteilt wird, indem mindestens eine Sektionsgrenze definiert wird. Ferner umfasst das Verfahren einen Schritt (120), in dem die Oberfläche der Druckform unter Verwendung von mindestens zwei Lasergraviereinheiten graviert wird, wobei jeder der mindestens zwei im Schritt (110) definierten Bildsektionen von einer der mindestens zwei Lasergraviereinheiten simultan graviert wird. Beim Unterteilen (110) des Gravurbilds wird die mindestens eine Sektionsgrenze so definiert, dass mindestens ein Abschnitt der mindestens einen Sektionsgrenze durch einen Gravurbereich des Gravurbilds verläuft. Damit lässt sich unabhängig von der Beschaffenheit des zu erzeugenden Gravurbilds eine Verkürzung der Gravurzeit bei der Verwendung mehrerer Lasergraviereinheiten erzielen.

Das in Fig. 1 dargestellte Verfahren beziehungsweise zumindest einer der dargestellten Verfahrensschritte kann durch verschiedene Mittel implementiert werden, wie z. B. Hardware, Firmware, mindestens ein Prozessor, mindestens ein Schaltkreis, die mit der Ausführung von Software verbunden sind. Zum Beispiel können eine oder mehrere der dargestellten Verfahrensschritte durch Befehle eines Computerprogrammprodukts bewirkt werden. Die Befehle können hierzu in einem Speicher gespeichert und von einem Prozessor ausgeführt werden. Die Befehle können aus dem Speicher auf eine Recheneinheit wie beispielsweise einen integrierten Schaltkreis, einen integrierten Prozessor, einen Computer, einen Laptop-Computer, einen Tablet-Computer oder ein Smartphone geladen werden, um bei der Ausführung des Programms durch einen Prozessor der Recheneinheit die Ausführung des Verfahrens zu bewirken. Die Recheneinheit kann bei der Ausführung des Verfahrens mit einer Vorrichtung wie beispielsweise einer Lasergraviermaschine zusammenwirken. Die Recheneinheit kann hierzu in die Vorrichtung integriert sein oder eine externe Recheneinheit, insbesondere ein Steuerungscomputer sein.

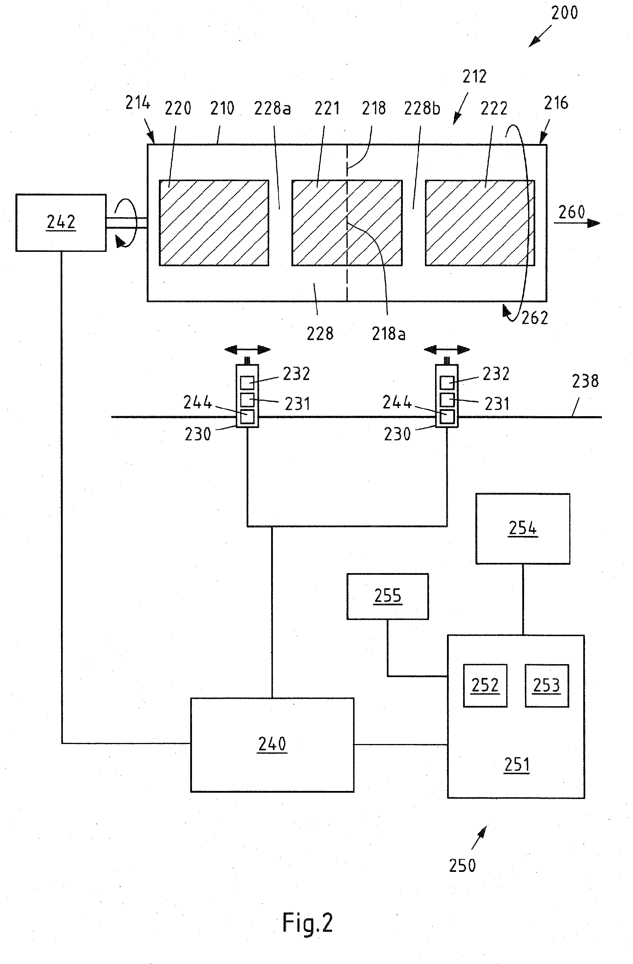

Fig. 2 zeigt eine schematische Darstellung einer Vorrichtung gemäß der zweiten Lehre der Erfindung. Bei der Vorrichtung handelt es sich um eine Lasergraviermaschine (200). Die Lasergraviermaschine (200) bearbeitet eine zylindrische Druckform (210), hier ein Sleeve (210) mittels Lasergravur. Auf der Druckform (210) wird ein Gravurbild (212) erzeugt, welches in Fig. 2 ebenfalls schematisch dargestellt ist, indem beispielhafte Gravurbereiche (220, 221, 222) des Gravurbilds als schraffierte Flächen und ein beispielhafter Freibereich (228) des Gravurbilds dargestellt sind. Die Lasergraviermaschine umfasst zwei Lasergraviereinheiten (230), eine Steuerungseinheit (240), einen Motor (242), jeweils einen Längsantrieb (244) für jede der zwei Lasergraviereinheiten (230) sowie eine integrierte Recheneinheit (250). Die integrierte Recheneinheit (250) umfasst einen Steuerrechner (251) mit einem Prozessor (252) und einem Speicher (253), eine Anzeigeeinheit (254) und eine Eingabeeinheit (255).

Die in Fig. 2 dargestellte Lasergraviermaschine (200) ist dazu konfiguriert, ein Verfahren gemäß der ersten Lehre der Erfindung durchzuführen. Zu diesem Zweck umfasst die Lasergraviermaschine (200) entsprechende Mittel, wie nachfolgend ausgeführt wird.

Zunächst führt die Lasergraviermaschine (200) ein Unterteilen des auf der äußeren Mantelfläche der Druckform (210) zu erzeugenden Gravurbilds (212) in zwei Bildsektionen (214, 216) durch Definition einer Sektionsgrenze (218) zwischen den zwei Bildsektionen (214, 216) durch. Das Unterteilen des Gravurbilds (212) wird von dem Prozessor (252) der integrierten Recheneinheit (250) durchgeführt. Hierzu kann ein Programm aus dem Speicher (253) geladen werden. Anschließend führt die Lasergraviermaschine (200) ein Gravieren der äußeren Mantelfläche der Druckform (210) unter Verwendung der zwei Lasergraviereinheiten (230) durch, wobei jede der zwei Bildsektionen (214, 216) von einer der zwei Lasergraviereinheiten (230) simultan graviert wird. Beim Unterteilen des Gravurbilds wird die Sektionsgrenze so definiert, dass mindestens ein Abschnitt der mindestens einen Sektionsgrenze durch einen Gravurbereich des Gravurbilds verläuft. Damit lässt sich unabhängig von der Beschaffenheit des zu Gravurbilds eine Verkürzung der Gravurzeit durch Verwendung der zwei Lasergraviereinheiten (230) erzielen. Im Beispiel von Fig. 2 ist eine Situation dargestellt, in der die Sektionsgrenze (218) so definiert wurde, dass der Abschnitt (218a) der Sektionsgrenze (218) durch den Gravurbereich (221) des Gravurbilds (212) verläuft. Hieraus ergeben sich zwei zumindest näherungsweise gleich große Bildsektionen (214, 216), sodass eine Reduzierung der Gravurzeit erreicht werden kann.

Bei den beispielhaften Gravurbereichen (220, 221, 222) in Fig. 2 handelt es sich um Vollgravurbereiche. Ebenso hätte es sich jedoch auch um Rastergravurbereiche handeln können, was einer Situation entsprechen würde, in der die Sektionsgrenze so definiert wird, dass ein Abschnitt der Sektionsgrenze durch einen Rastergravurbereich des Gravurbilds verläuft. Allgemein sind Gravurbereiche, bei denen es sich sowohl um Vollgravurbereiche als auch um Rastergravurbereiche handeln kann, in den Figuren als schraffierte Flächen dargestellt. Gravurbereiche, bei denen es sich spezifisch um Rastergravurbereiche handelt, sind als gepunktete Flächen dargestellt.

In der in Fig. 2 dargestellten Ausführungsform der Lasergraviermaschine (200) umfassen die Mittel zum Unterteilen des Gravurbilds (212) den Prozessor (252) der integrierten Recheneinheit (250). Die Mittel zum Gravieren der Oberfläche der Druckform (210) umfassen die zwei Lasergraviereinheiten (230), den Motor (242), die Längsantriebe (244) der zwei Lasergraviereinheiten (230), den Prozessor (252) der integrierten Recheneinheit (250) sowie die Steuereinheit (240). Die Lasergraviereinheiten (230) erzeugen mittels Laserquellen (231) und Modulatoren (232) Laserstrahlen zur Erzeugung des Gravurbilds auf der Oberfläche der Druckform (210). Der Motor (242) dreht die Druckform (210) um die zylindrische Längsachse (260), sodass auf diese Weise die zwei Lasergraviereinheiten (230) in Umfangsrichtung (262) relativ zu der äußeren Mantelfläche der Druckform (210) positioniert werden. Die Längsantriebe (244) verschieben die Lasergraviereinheiten (230) auf einer Führungsschiene (238) parallel zu der Axialrichtung (260) der Druckform (210), sodass auf diese Weise die zwei Lasergraviereinheiten (230) in Axialrichtung (260) relativ zu der äußeren Mantelfläche der Druckform (210) positioniert werden. Die Steuereinheit (240) kommuniziert mit dem Prozessor (242) und steuert die Lasergraviereinheiten (230), insbesondere die Modulatoren (232), sowie den Motor (242) und die Längsantriebe (244) derart an, dass die Oberfläche der Druckform (210) entsprechend des zu gravierenden Gravurbilds (212) graviert wird.

Die in Fig. 2 dargestellte Lasergraviermaschine (200) verfügt über eine integrierte Recheneinheit (250). Ebenso könnte die Recheneinheit (250) jedoch auch eine externe Recheneinheit einer Lasergraviermaschine darstellen, sodass auf diese Weise ein System gemäß der zweiten Lehre entstünde. Die externe Recheneinheit kann unter anderem ein Steuerungscomputer sein.

Obwohl in Fig. 2 lediglich zwei Bildsektionen (214, 216) sowie zwei Lasergraviereinheiten (230) dargestellt sind, kann die Erfindung ohne weiteres auch mit einer beliebigen Anzahl von mehr als zwei Bildsektionen sowie mehr als zwei Lasergraviereinheiten realisiert werden. Die Anzahl der Lasergraviereinheiten sollte mindestens so groß sein wie die Anzahl der Bildsektionen, in die das Gravurbild unterteilt wird. Falls die Anzahl der zur Verfügung stehenden Lasergraviereinheiten größer ist als die Anzahl der Bildsektionen, ist es möglich, dass überschüssige Lasergraviereinheiten nicht am erfindungsgemäßen Verfahren beteiligt sind und sich beispielsweise in einer Parkposition auf der Führungsschiene (238) befinden.

Die in Fig. 2 dargestellte Lasergraviermaschine (200) ist dazu konfiguriert, dass die Sektionsgrenze (218) in mindestens einem Abschnitt der Sektionsgrenze (218) basierend auf einer Benutzereingabe definiert wird. Als Mittel zur Definition der Sektionsgrenze (218) basierend auf einer Benutzereingabe in mindestens einem Abschnitt der Sektionsgrenze (218) umfasst die Lasergraviermaschine (200) hierzu neben dem Prozessor (252) die Eingabeeinheit (255). Die Eingabeeinheit (255) umfasst hier beispielhaft eine Computermaus sowie eine Computertastatur. Beispielsweise ist denkbar, dass verschiedene mögliche Verläufe der Sektionsgrenze zunächst durch den Prozessor (252) ermittelt und einem Benutzer auf der Anzeigeeinheit (254) angezeigt werden. Der Benutzer kann dann eine Eingabe zur Auswahl einer Sektionsgrenze vornehmen. Zusätzlich ist denkbar, dass der Benutzer in Bereichen, in denen es in besonders hohem Maße auf den Verlauf der Sektionsgrenze ankommt, eine manuelle Anpassung der Sektionsgrenze vornehmen kann, beispielsweise indem der Benutzer den Verlauf der Sektionsgrenze unter Verwendung der Computermaus in eine Darstellung des Gravurbilds (212) auf der Anzeigeeinheit (254) einzeichnet. Die von der Eingabeeinheit (255) erfasste Benutzereingabe wird von dem Prozessor (252) dann bei der endgültigen Definition der Sektionsgrenze (218) berücksichtigt. Hierdurch wird erreicht, dass ein Benutzer, welcher die Durchführung eines erfindungsgemäßen Verfahrens auf der Lasergraviermaschine (200) initiiert oder steuert, Einfluss auf die Definition der Sektionsgrenze (218) nehmen kann.

Die in Fig. 2 dargestellte Lasergraviermaschine (200) ist ferner dazu konfiguriert, dass eine Darstellung des Gravurbilds (212) zusammen mit einer Darstellung der Sektionsgrenze (218) oder zumindest zusammen mit einer Darstellung eines vorläufigen Verlaufs der mindestens einen Sektionsgrenze (218) auf mindestens einer Anzeigeeinheit (254) angezeigt wird. Als entsprechendes Mittel hierzu umfasst die Lasergraviermaschine (200) neben dem Prozessor (252) die Anzeigeeinheit (254). Die Anzeigeeinheit (254) zeigt während des Unterteilens des Gravurbilds (212) einen vorläufigen Verlauf der Sektionsgrenze (218) an. Hierdurch wird die Definition der Sektionsgrenze (218) für den Benutzer vereinfacht, da der Benutzer eine optische Rückmeldung über den Verlauf der von ihm vorläufig definierten Sektionsgrenze (218) erhält. Ferner kann die Anzeigeeinheit (254) auch während des Gravierens der Oberfläche der Druckform (210) den definierten Verlauf der Sektionsgrenze (218) anzeigen, wodurch es dem Benutzer erleichtert wird, die Durchführung eines erfindungsgemäßen Verfahrens auf der Lasergraviermaschine (200) zu steuern und zu überwachen.

Wie Fig. 2 zeigt, sind die zwei Lasergraviereinheiten (230) in Axialrichtung (260) der Druckform (210) unabhängig voneinander bewegbar. Hierzu umfassen die zwei Lasergraviereinheiten (230) jeweils einen Längsantrieb (244). Jeder Längsantrieb (244) kann unabhängig von dem anderen Längsantrieb (244) angesteuert werden und die ihm zugehörige Lasergraviereinheit (230) bewegen. Hierdurch wird erreicht, dass die zwei Lasergraviereinheiten beim Gravieren der Oberfläche der Druckform die jeweiligen Bildsektionen unabhängig voneinander gravieren können. Beispielsweise kann jede Lasergraviereinheit (230) die innerhalb der jeweils zu bearbeitenden Bildsektion (214, 216) auftretenden Freibereiche (228a, 228b) zwischen den Gravurbereichen (220, 221, 222) unabhängig von der anderen Lasergraviereinheit (230) in Axialrichtung (260) überfahren, sodass insgesamt eine Verkürzung der Gravurzeit erreicht werden kann.

Wie Fig. 2 ferner zeigt, umfasst die Lasergraviermaschine (200) eine eigene Laserquelle (231) und einen eigenen Modulator (232) für jede der zwei Lasergraviereinheiten (230). Hierdurch wird erreicht, dass die zwei Lasergraviereinheiten (230) beim Gravieren der Oberfläche der Druckform (210) die jeweiligen Bildsektionen (214, 216) unabhängig voneinander gravieren können, womit insgesamt eine Verkürzung der Gravurzeit erreicht werden kann.

In der in Fig. 2 dargestellten Lasergraviermaschine (200) sind die Laserquellen (231) der zwei Lasergraviereinheiten (230) Fiber-Laserquellen (231). Hierdurch lassen sich eine hohe Strahlqualität sowie ein nahezu wartungsfreier Aufbau der Laserquellen (231) erreichen. Ebenso wären jedoch auch andere Laserquellen, wie beispielsweise CO₂-Laserquellen denkbar. Hierdurch lassen sich auch Materialien wie beispielsweise Silikone gravieren, die nicht von Fiber-Lasern graviert werden können.

In der in Fig. 2 dargestellten Lasergraviermaschine (200) sind die Modulatoren (232) der zwei Lasergraviereinheiten (230) akustooptische Modulatoren (232). Hierdurch lässt sich eine besonders präzise Modulation der von den Laserquellen (231) erzeugten Laserstrahlen und damit ein entsprechend akkurates Gravurergebnis bei der Gravur des Werkstücks (210) erzielen.

Darüber hinaus umfasst jede Lasergraviereinheit (230) der in Fig. 2 dargestellten Lasergraviermaschine (200) eine eigene Linse (nicht dargestellt). Hierdurch wird die Auflösung des Gravurbilds (212) erhöht und damit die Schärfe des Gravurergebnisses verbessert.

In der in Fig. 2 dargestellten Lasergraviermaschine (200) sind die beiden Lasergraviereinheiten (230) im Wesentlichen identisch. Konkret sind beide Lasergraviereinheiten (230) auf gleiche Art und Weise aus denselben Komponenten aufgebaut. Die Eigenschaften der beiden Lasergraviereinheiten (230) unterscheiden sich damit nur durch unvermeidbare Abweichungen wie beispielsweise Fertigungstoleranzen der Komponenten. Als Komponenten sind hier jeweils eine Fiber-Laserquelle (231), ein akustooptischer Modulator (232) und ein Längsantrieb (244) dargestellt, wobei die beiden Lasergraviereinheiten (230) daneben jeweils noch mehrere nicht dargestellte Komponenten wie beispielsweise eine Linse aufweisen können. Dadurch, dass die beiden Lasergraviereinheit (230) im Wesentlichen identisch sind, kann ein besonders gleichmäßiges Gravurergebnis erreicht werden.

Die in Fig. 2 dargestellte Druckform (210) ist eine Druckform (210) für den Flexodruck. Ebenso wäre es jedoch denkbar, dass die Druckform (210) ist eine Druckform (210) für den Tiefdruck ist. Sowohl beim Flexodruck als auch beim Tiefdruck lässt sich unabhängig von der Beschaffenheit des Gravurbilds eine Verkürzung der Gravurzeit bei der Verwendung mehrerer Lasergraviereinheiten (230) erzielen.

Die zu gravierende Oberfläche der in Fig. 2 dargestellten Druckform (210) besteht vollständig aus Gummi. Ebenso wäre es jedoch denkbar, dass die zu gravierende Oberfläche der Druckform (210) zumindest teilweise aus Metall oder Kunststoff besteht. Es bestehen keine Limitierungen dahingehend, welche Materialien mit der Lasergraviermaschine (200) bearbeitet werden können.

Die in Fig. 2 dargestellte Druckform (210) ist ein Sleeve (210). Ebenso könnte die Druckform (210) jedoch auch ein Druckzylinder oder mindestens eine flexible Druckplatte, die auf einem Fixierzylinder fixiert ist, sein. Die Lasergraviermaschine (200) ist gleichermaßen für die Herstellung von Sleeves, Druckzylindern und flexiblen Druckplatten geeignet, wobei unabhängig von der Beschaffenheit des zu erzeugenden Gravurbilds eine Verkürzung der Gravurzeit durch Verwendung der zwei Lasergraviereinheiten (230) erreicht werden kann.

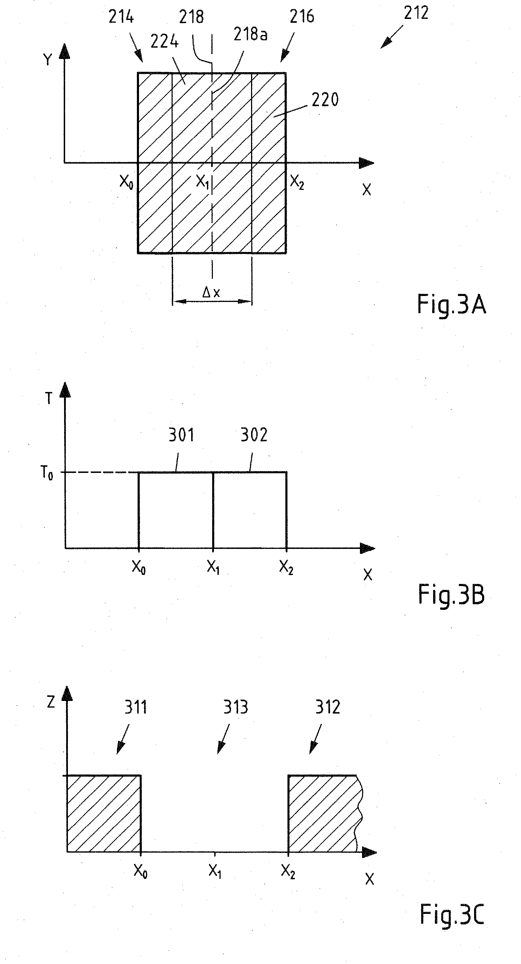

Die Figuren 3A bis 3I dienen der Veranschaulichung eines die Sektionsgrenze umgebenden Überlappungsbereichs gemäß einer bevorzugten Ausführungsform der Erfindung sowie der dadurch erzielbaren Vorteile. Die nachfolgenden Erläuterungen im Zusammenhang mit den Figuren 3A bis 3I beziehen sich dabei beispielhaft auf den Flexodruck. Zunächst zeigt Fig. 3A einen beispielhaften Gravurbereich (220) eines Gravurbilds (212) in einer Draufsicht. Bei dem Gravurbereich (220) handelt es sich hier beispielhaft um einen Vollgravurbereich (220). Ferner wurde eine Sektionsgrenze (218) definiert, welche in dem Abschnitt (218a) durch den Vollgravurbereich (220) verläuft. Die Sektionsgrenze (218) unterteilt das Gravurbild (212) in die beiden Bildsektionen (214, 216). Außerdem wurden eine x-Richtung und eine y-Richtung für das Gravurbild (212) definiert, wie in Fig. 3A dargestellt. Dabei verläuft die y-Richtung parallel zur Sektionsgrenze (218) und die x-Richtung senkrecht dazu. Die Punkte x₀ und x₂ entsprechen den Positionen der beiden Ränder des Vollgravurbereichs (220) in x-Richtung und der Punkt x₁ entspricht der Position der Sektionsgrenze (218) in x-Richtung. Wie Fig. 3A nun zeigt, wurde entlang des Abschnitts (218a) der Sektionsgrenze (218) ein die Sektionsgrenze umgebender Überlappungsbereich (224) definiert. In dem Überlappungsbereich (224) überlappen sich die beiden Bildsektionen (214, 216). Der Überlappungsbereich (224) liegt innerhalb des Vollgravurbereichs (220) des Gravurbilds (212). Ferner weist der Überlappungsbereich (224) eine Breite von Δx senkrecht zum Verlauf der Sektionsgrenze (218) auf, welche hier beispielhaft 5 mm beträgt.

Die Vorteile des Überlappungsbereichs (224) lassen sich in diesem Beispiel anhand der Figuren 3B bis 3I nachvollziehen. Fig. 3B zeigt hierzu ein Diagramm, in dem auf der Abszisse die Position in x-Richtung und auf der Ordinaten die Gravurtiefe T der beiden Lasergraviereinheiten, die beim Gravieren der entsprechenden Druckform den beiden aneinandergrenzenden Bildsektionen (214, 216) des Gravurbilds (212) aus Fig. 3A zugeordnet sind, aufgetragen sind. Die Positionen x₀, x₁ und x₂ entsprechen dabei denen in Fig. 3A. In Fig. 3B ist zunächst noch eine Situation dargestellt, in der kein Überlappungsbereich definiert wurde. Ferner zeigt Fig. 3B eine Situation, die einer perfekten Positionierbarkeit der beiden Lasergraviereinheiten in Bezug auf die Oberfläche der Druckform entspricht. Dementsprechend findet zwischen den Gravurtiefen (301, 302) der beiden Lasergraviereinheiten ein sprunghafter Übergang an der Position x₁ der Sektionsgrenze (218) statt. Dabei entspricht die Position x₁, an der die Gravurtiefe (301) der ersten Lasergraviereinheit sprunghaft von T = To auf T = 0 abfällt, exakt der Position x₁, an der die Gravurtiefe (302) der zweiten Lasergraviereinheit sprunghaft von T = 0 auf T = To ansteigt.

Fig. 3C zeigt das hieraus resultierende Gravurprofil der entsprechenden Druckform. Das Gravurprofil ist als Querschnitt durch die Oberfläche der Druckform dargestellt, wobei die z-Richtung senkrecht zur Oberfläche der Druckform definiert ist und die x-Richtung derjenigen in den Figuren 3A und 3B entspricht. Aufgrund der perfekten Positionierbarkeit der Lasergraviereinheiten weist das Gravurprofil erhöhte Elemente (311, 312), die der Gravurtiefe T = 0 in Fig. 3B entsprechen, sowie ein dazwischenliegendes vertieftes Element (313), das der Gravurtiefe T = To in Fig. 3B entspricht, auf. Mit diesem Gravurprofil lässt sich in diesem Beispiel das gewünschte Druckbild realisieren.

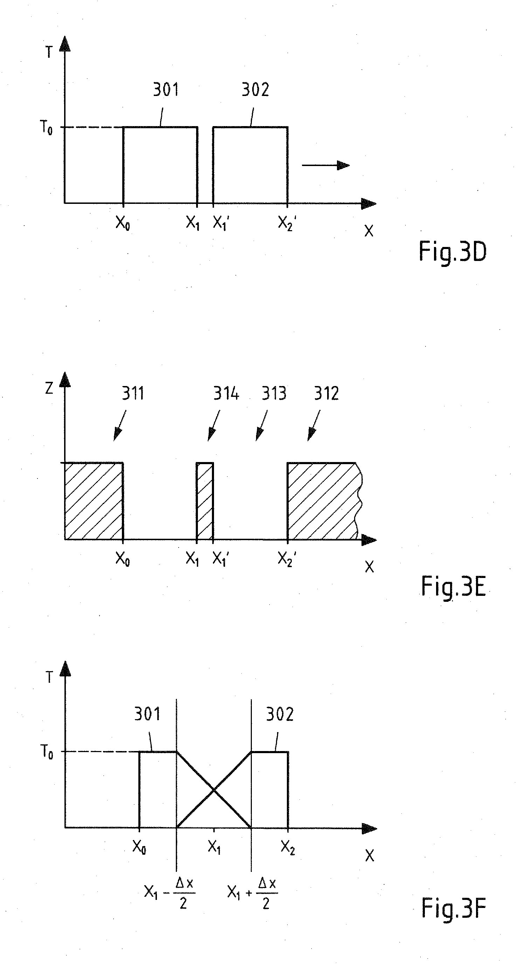

Die Figuren 3D und 3E zeigen eine Situation, in der weiterhin kein Überlappungsbereich definiert wurde, jedoch die Positionierbarkeit der beiden Lasergraviereinheiten aufgrund von Ungenauigkeiten nicht perfekt ist. Solche Ungenauigkeiten können in der Praxis beispielsweise dadurch entstehen, dass die Längsantriebe der Lasergraviereinheiten keine unendlich hohe Genauigkeit aufweisen, oder dass bei der Erfassung der axialen Position der Druckform eine Messtoleranz auftritt. Die nicht perfekte Positionierbarkeit der beiden Lasergraviereinheiten drückt sich in Fig. 3D dadurch aus, dass der Bereich zwischen der Position x₁' und der Position x₂', in dem die Gravurtiefe (302) der der zweiten Lasergraviereinheit den Wert T = To annimmt, gegenüber dem ursprünglichen Bereich zwischen x₁ und x₂ (vgl. Fig. 3B) geringfügig nach rechts verschoben ist. Folglich findet im Bereich zwischen der Position x₁ der Sektionsgrenze (218) und der Position x₁' beim Gravieren der Oberfläche der Druckform kein Materialabtrag statt. Im resultierenden Gravurprofil, welches in Fig. 3E gezeigt ist, tritt demzufolge ein zusätzliches erhöhtes Element (314) zwischen der Position x₁ und der Position x₁' auf. Im Flexodruck wird dieses zusätzliche erhöhte Element (314) mit Farbe versehen und bewirkt einen ungewünschten Farbauftrag auf den Bedruckstoff, sodass hierdurch die Sektionsgrenze (218) im Druckbild unmittelbar sichtbar wird.

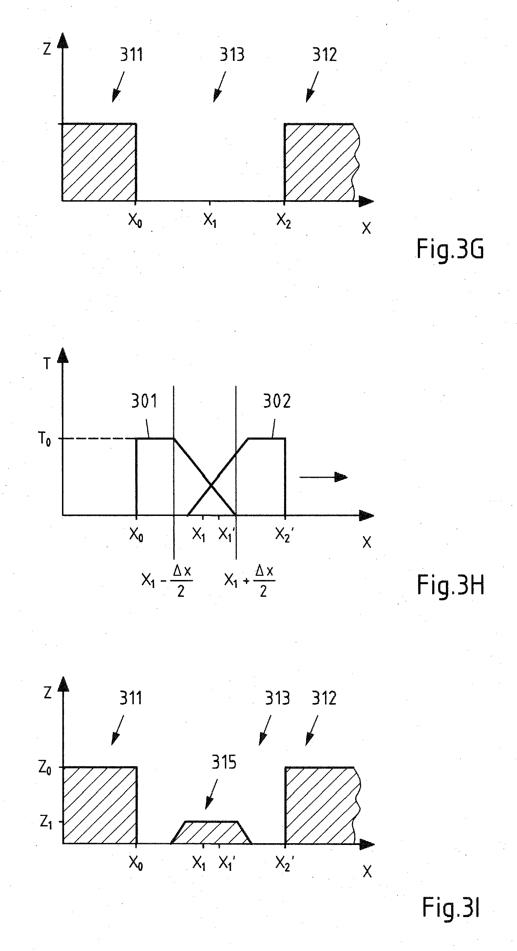

Demgegenüber zeigen die Figuren 3F, 3G, 3H und 3I jeweils eine Situation, in der ein Überlappungsbereich, wie im Zusammenhang mit Fig. 3A ausgeführt, definiert wurde. Zunächst wird für die Figuren 3F und 3G wieder von einer perfekten Positionierbarkeit der beiden Lasergraviereinheiten ausgegangen. Fig. 3F zeigt ein entsprechendes Diagramm mit der Gravurtiefe T als Ordinate und der Position in x-Richtung als Abszisse. Der Überlappungsbereich mit der Breite Δx befindet sich symmetrisch um die Position x₁ der Sektionsgrenze (218). Somit beginnt der Überlappungsbereich bei der Position x₁ - Δx/2 und endet bei der Position x₁ + Δx/2. In dem Überlappungsbereich findet nun ein gradueller Übergang zwischen den Gravurtiefen (301, 302) der beiden Lasergraviereinheiten statt. Konkret steigt die Gravurtiefe (301) der ersten Lasergraviereinheit kontinuierlich von T = 0 auf T = To an, während die Gravurtiefe (302) der ersten Lasergraviereinheit kontinuierlich von T = To auf T = 0 abfällt. Fig. 3G zeigt das hieraus resultierende Gravurprofil. Beim Gravieren der Oberfläche der Druckform wird der Überlappungsbereich von beiden Lasergraviereinheiten, die den beiden aneinandergrenzenden Bildsektionen (214, 216) in Fig. 3A jeweils zugeordnet sind, graviert. Aufgrund der perfekten Positionierbarkeit der Lasergraviereinheiten resultiert folglich exakt das gleiche Gravurprofil wie im Fall von Fig. 3C. Erneut lässt sich mit diesem Gravurprofil in diesem Beispiel das gewünschte Druckbild realisieren.

Schließlich zeigen die Figuren 3H und 3I wieder eine Situation, in der die Positionierbarkeit der beiden Lasergraviereinheiten aufgrund von Ungenauigkeiten nicht perfekt ist. Die nicht perfekte Positionierbarkeit drückt sich in Fig. 3H dadurch aus, dass der Bereich zwischen der Position x₁' - Δx/2 und der Position x₂', in dem die Gravurtiefe (302) der der zweiten Lasergraviereinheit kontinuierlich von T = 0 auf T = To ansteigt und schließlich den konstanten Wert T = To annimmt, gegenüber dem ursprünglichen Bereich zwischen x₁ - Δx/2 und xz (vgl. Fig. 3F) geringfügig nach rechts verschoben ist. Aufgrund des graduellen Übergangs zwischen den Gravurtiefen (301, 302) der beiden Lasergraviereinheiten im Überlappungsbereich findet jedoch beim Gravieren der Oberfläche der Druckform, anders als in Fig. 3E, auch in dem Bereich zwischen der Position x₁ der Sektionsgrenze (218) und der Position x₁' ein Materialabtrag statt. Im resultierenden Gravurprofil, welches in Fig. 3I gezeigt ist, tritt demzufolge ein zusätzliches Element (315) auf. Zwar hat dieses zusätzliche Element (315) nicht die Höhe z = 0 wie das vertiefte Element (313) (vgl. Fig. 3G). Trotzdem ist das zusätzliche Element (315) kein erhöhtes Element, welches im Flexodruck mit Farbe versehen wird. Denn wie Fig. 3I zeigt, ist die Höhe zi des zusätzlichen Elements (315) deutlich geringer als die Höhe zo der erhöhten Elemente (311, 312). Folglich kommt es, anders als in Fig. 3E, nicht zu einem ungewünschten Farbauftrag auf den Bedruckstoff, und dementsprechend auch nicht zu einer Sichtbarkeit der Sektionsgrenze (218) im Druckbild.

Die Ausführungen zu den Figuren 3A bis 3I lassen sich also wie folgt zusammenfassen: Selbst im Falle einer nicht perfekten Positionierbarkeit der beiden Lasergraviereinheiten kann mit dem graduellen Übergang zwischen den Gravurtiefen der beiden Lasergraviereinheiten in dem Überlappungsbereich das Sichtbarwerden der Sektionsgrenze verhindert werden und somit das gewünschte Druckbild realisiert werden. Im Falle einer perfekten Positionierbarkeit ergibt sich keine wesentliche Veränderung, insbesondere keine Verschlechterung des Druckbilds.

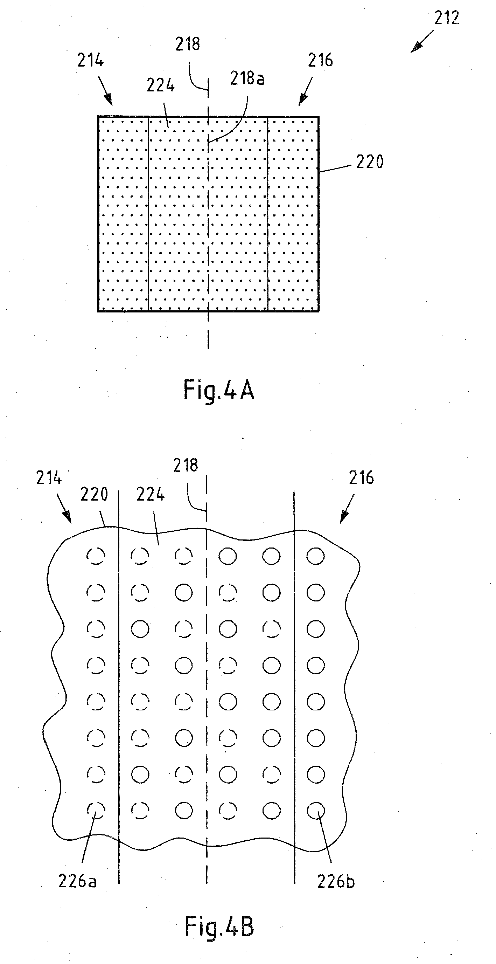

Die Figuren 4A und 4B dienen der Veranschaulichung eines die Sektionsgrenze umgebenden Überlappungsbereichs gemäß einer weiteren bevorzugten Ausführungsform der Erfindung sowie der dadurch erzielbaren Vorteile. Die nachfolgenden Erläuterungen in Zusammenhang mit den Figuren 4A und 4B beziehen sich dabei beispielhaft auf den Tiefdruck, sind jedoch auch auf den Flexodruck übertragbar. Zunächst zeigt Fig. 4A einen beispielhaften Rastergravurbereich (220) eines Gravurbilds (212) in einer Draufsicht. Ferner ist eine Sektionsgrenze (218) zu sehen, welche so definiert wurde, dass sie in dem Abschnitt (218a) durch den Rastergravurbereich (220) verläuft. Die Sektionsgrenze (218) unterteilt das Gravurbild (212) in die beiden Bildsektionen (214, 216). Wie Fig. 4A nun zeigt, wurde entlang des Abschnitts (218a) der Sektionsgrenze (218) ein die Sektionsgrenze umgebender Überlappungsbereich (224) definiert. In dem Überlappungsbereich (224) überlappen sich die beiden Bildsektionen (214, 216). Der Überlappungsbereich (224) liegt innerhalb des Rastergravurbereichs (220) des Gravurbilds (212). Beim Gravieren der Oberfläche der Druckform wird die Bildsektion (214) von einer ersten Lasergraviereinheit graviert, während die Bildsektion (216) von einer zweiten Lasergraviereinheit graviert wird. Der Überlappungsbereich (224) wird von beiden Lasergraviereinheiten, die den beiden aneinandergrenzenden Bildsektionen (214, 216) jeweils zugeordnet sind, graviert. Der Überlappungsbereich (224) weist hier exemplarisch eine Breite von 1 mm in einer Richtung senkrecht zum Verlauf der Sektionsgrenze (218) auf, wobei größere Werte für die Breite ohne weiteres ebenfalls denkbar sind.

Fig. 4B zeigt einen vergrößerten Ausschnitt des Überlappungsbereichs (224) aus Fig. 4A. In dem hier beschriebenen Beispiel werden vertiefte Elemente (226a, 226b) in die Oberfläche der Druckform graviert. Insofern findet nur eine teilflächige Gravur der Oberfläche der Druckform zur Erzeugung von Rasterpunkten statt. Bei den vertieften Elementen (226a, 226b) handelt es sich um druckende Vertiefungen der Oberfläche der Druckform, welche im Tiefdruck auch Näpfchen (226a, 226b) genannt werden. Die einzelnen vertieften Elemente sind in Fig. 4A nur insofern angedeutet, als dass der Rastergravurbereich (220) schematisch als gepunktete Fläche dargestellt ist. In der vergrößerten Darstellung von Fig. 4B haben die vertieften Elemente (226a, 226b) exemplarisch eine Kreisform. Fig. 4B zeigt nun ferner eine beispielhafte Zuordnung der jeweiligen vertieften Elemente (226a, 226b) zu den beiden an der Gravur der Bildsektionen (214, 216) beteiligten Lasergraviereinheiten. Dabei sind vertiefte Elemente (226a), die von der ersten, der Bildsektion (214) zugeordneten Lasergraviereinheit graviert werden, schematisch als Kreise mit unterbrochener Kontur dargestellt. Demgegenüber sind vertiefte Elemente (226b), die von der zweiten, der Bildsektion (216) zugeordneten Lasergraviereinheit graviert werden, schematisch als Kreise mit durchgehender Kontur dargestellt. Wie in Fig. 4B zu sehen ist, werden im Überlappungsbereich (224) diejenigen vertieften Elemente (226a), die innerhalb der Bildsektion (216) liegen, von der ersten Lasergraviereinheit graviert, welche der Bildsektion (214) zugeordnet ist. Im Gegenzug werden diejenigen vertieften Elemente (226b), die innerhalb der Bildsektion (214) liegen, von der zweiten Lasergraviereinheit graviert, welche der Bildsektion (216) zugeordnet ist. Dadurch, dass im Überlappungsbereich (224) die vertieften Elemente (226a, 226b), welche innerhalb einer der beiden aneinandergrenzenden Bildsektionen (214, 216) liegen, von derjenigen Lasergraviereinheit graviert werden, welche der jeweils anderen Bildsektion zugeordnet ist, kann ein gleichmäßigerer Übergang zwischen den beiden Bildsektionen (214, 216) erreicht werden, sodass der Verlauf der Sektionsgrenze (218) im späteren Druckbild nicht so leicht für das menschliche Auge erkennbar ist. Dies gilt insbesondere dann, wenn die Eigenschaften der einzelnen Lasergraviereinheiten aufgrund von Fertigungstoleranzen nicht perfekt identisch sind, oder wenn Ungenauigkeiten bei der Positionierung der Lasergraviereinheiten bestehen.

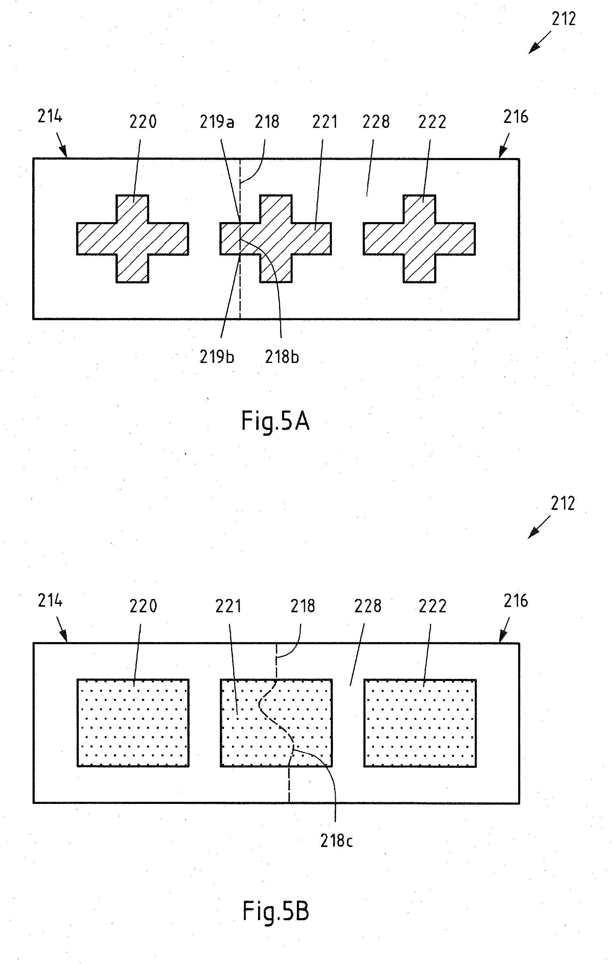

In Fig. 5A bis 5E sind jeweils schematische Darstellungen von auf verschiedene Art und Weise definierten Sektionsgrenzen gemäß bevorzugten Ausführungsformen der Erfindung gezeigt. Je nach Beschaffenheit des Gravurbilds kann es dabei von Vorteil sein, die mindestens eine Sektionsgrenze auf eine bestimmte Art und Weise zu definieren.

Zunächst zeigt Fig. 5A eine bevorzugte Ausführungsform der Erfindung, bei der die Sektionsgrenze (218) so definiert wird, dass die Länge der direkten Verbindungslinie zwischen dem Punkt (219a), an dem die Sektionsgrenze (218) in den Gravurbereich (221) eindringt, und dem Punkt (219b), an dem die Sektionsgrenze (218) aus diesem Gravurbereich (221) austritt, gegenüber der maximal möglichen Länge reduziert wird. Würde man für das in Fig. 5A gezeigte Gravurbild (212) die Sektionsgrenze entlang einer senkrechten Linie exakt in der Mitte des Gravurbilds (212) definieren, so würde die Sektionsgrenze in diesem Fall, bezogen auf ihre gesamte Länge, in einem vergleichsweise langen Abschnitt durch den Gravurbereich (221) verlaufen. Dieser Fall würde für das in Fig. 5A gezeigte Gravurbild (212) auch der maximal möglichen Länge der direkten Verbindungslinie zwischen dem Punkt, an dem die Sektionsgrenze in den Gravurbereich (221) eindringt, und dem Punkt, an dem die Sektionsgrenze aus dem Gravurbereich (221) austritt, entsprechen. Stattdessen wurde die Sektionsgrenze (218) hier jedoch so definiert, dass sie gegenüber der senkrechten Linie exakt in der Mitte des Gravurbilds (212) nach links verschoben ist. Dadurch tritt die Sektionsgrenze (218) an dem Punkt (219a) in den Gravurbereich (221) ein und an dem Punkt (219b) wieder aus dem Gravurbereich (221) aus, wobei die Länge der direkten Verbindungslinie zwischen dem Punkt (219a) und dem Punkt (219b) gegenüber der maximal möglichen Länge reduziert wird. Hierdurch wird erreicht, dass die Sektionsgrenze (218), bezogen auf ihre gesamte Länge, nur in einem relativ kurzen Abschnitt (218b) durch den Gravurbereich (221) verläuft, sodass die optische Wahrnehmbarkeit der Sektionsgrenze (218) im späteren Druckbild verringert wird.

Ferner zeigt Fig. 5B eine bevorzugte Ausführungsform der Erfindung, bei der in dem Abschnitt (218c) der Sektionsgrenze (218), in welchem die Sektionsgrenze (218) durch den Rastergravurbereich (221) des Gravurbilds (212) verläuft, die Sektionsgrenze (218) so definiert wird, dass die Sektionsgrenze (218) gewellt verläuft. Ebenso wäre es jedoch auch denkbar, dass die Sektionsgrenze (218) in dem Abschnitt (218c) gebogen, gezackt und/oder auf sonstige Weise abweichend von einer durchgängigen geraden Linie verläuft. Hierdurch wird erreicht, dass die optische Wahrnehmbarkeit der Sektionsgrenze (218) im späteren Druckbild verringert wird.

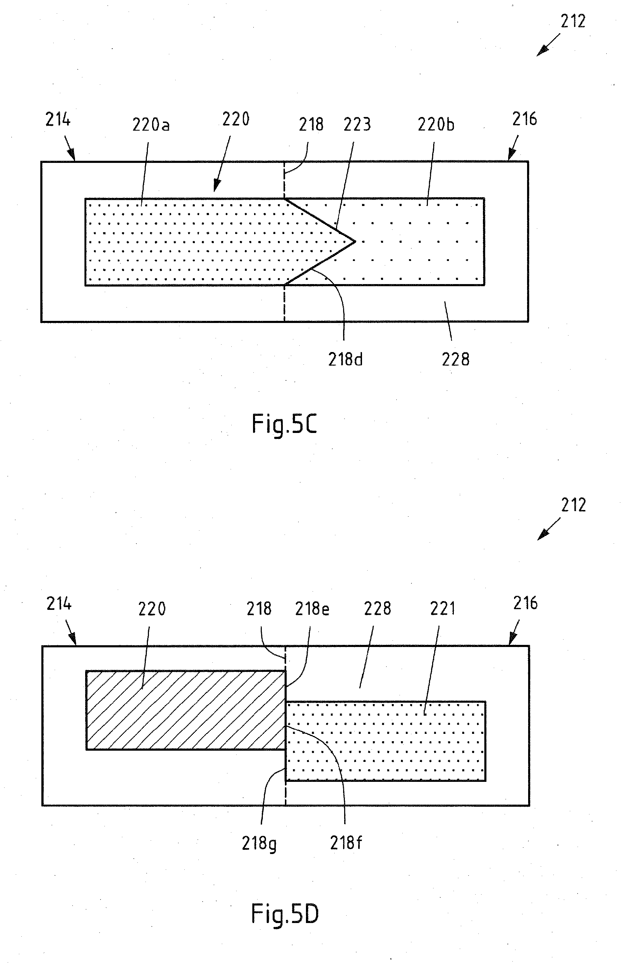

Ferner zeigt Fig. 5C eine bevorzugte Ausführungsform der Erfindung, bei der in dem Abschnitt (218d) der Sektionsgrenze (218), in welchem die Sektionsgrenze (218) durch den Rastergravurbereich (220) des Gravurbilds (212) verläuft, die Sektionsgrenze (218) so definiert wird, dass die Sektionsgrenze entlang einer inneren Kontur des Rastergravurbereichs (220) verläuft. Hierzu zeigt Fig. 5C ein beispielhaftes Gravurbild (212) mit einem Rastergravurbereich (220), der eine innere Kontur aufweist. Konkret ist der Rastergravurbereich (220) aus einem ersten Bereich (220a) und einem zweiten Bereich (220b) zusammengesetzt, wobei diese beiden Bereiche (220a, 220b) des Rastergravurbereichs (220) jeweils eine unterschiedliche Rasterung aufweisen. Die unterschiedliche Rasterung besteht hier exemplarisch darin, dass der Abstand der Rasterpunkte in den beiden Bereichen (220a, 220b) unterschiedliche Werte annimmt. In Fig. 5C ist die unterschiedliche Rasterung schematisch angedeutet, indem die beiden Bereiche (220a, 220b) als Flächen mit unterschiedlicher Punktierung dargestellt sind. Der abrupte Übergang an der Grenze zwischen den Bereichen (220a, 220b) stellt hier eine innere Kontur des Rastergravurbereichs (220) dar und die Sektionsgrenze (218) verläuft in dem Abschnitt (218d) entlang dieser inneren Kontur. Hierdurch wird erreicht, dass die optische Wahrnehmbarkeit der Sektionsgrenze (218) im späteren Druckbild verringert wird, da die innere Kontur des Rastergravurbereichs (220) ohnehin vom menschlichen Auge als eine Art Grenze wahrgenommen wird.

Die in Fig. 2 dargestellte Lasergraviermaschine (200) ist in diesem Zusammenhang dazu konfiguriert, dass die in Fig. 5C gezeigte Sektionsgrenze (218) in dem Abschnitt (218d) der Sektionsgrenze (218) so definiert wird, dass die Sektionsgrenze (218) entlang der inneren Kontur des Rastergravurbereichs (220) verläuft. Als Mittel zur Definition der Sektionsgrenze (218) entlang der inneren Kontur ist der Prozessor (252) dazu eingerichtet, bei der Definition der Sektionsgrenze (218) innere Konturen in Rastergravurbereichen des Gravurbilds zu erkennen und zu berücksichtigen. Hierdurch wird ebenfalls erreicht, dass die Sektionsgrenze (218) im späteren Druckbild nicht so leicht für das menschliche Auge erkennbar ist.

Ferner zeigt Fig. 5D eine bevorzugte Ausführungsform der Erfindung, bei der die Sektionsgrenze (218) in den Abschnitten (218e, 218f, 218g) der Sektionsgrenze (218) so definiert wird, dass die Sektionsgrenze (218) entlang eines Rands zwischen einem Gravurbereich (220, 221) und einem Freibereich (228) oder entlang eines Rands zwischen einem Vollgravurbereich (220) und einem Rastergravurbereich (221) verläuft. Hierzu zeigt Fig. 5D ein beispielhaftes Gravurbild (212) mit einem Gravurbereich (220), einem Rastergravurbereich (221) und einem Freibereich (228). Bei dem Gravurbereich (220) handelt es sich hier beispielhaft um einen Vollgravurbereich (220). Wie Fig. 5D zeigt, wurde die Sektionsgrenze (218) im Abschnitt (218e) der Sektionsgrenze (218) so definiert, dass die Sektionsgrenze (218) entlang des Rands zwischen dem Vollgravurbereich (220) und dem Freibereich (228) verläuft. Weiterhin wurde die Sektionsgrenze (218) im Abschnitt (218f) der Sektionsgrenze (218) so definiert, dass die Sektionsgrenze (218) entlang des Rands zwischen dem Vollgravurbereich (220) und dem Rastergravurbereich (221) verläuft. Schließlich wurde die Sektionsgrenze (218) im Abschnitt (218g) der Sektionsgrenze (218) so definiert, dass die Sektionsgrenze (218) entlang des Rands zwischen dem Rastergravurbereich (221) und dem Freibereich (228) verläuft. Durch die hier gezeigte Definition der Sektionsgrenze wird erreicht, dass die optische Wahrnehmbarkeit der mindestens einen Sektionsgrenze im späteren Druckbild verringert wird, da die Ränder zwischen den Bereichen (220, 221, 228) des Gravurbilds (212) ohnehin vom menschlichen Auge als eine Art Grenze wahrgenommen werden.

Die in Fig. 2 dargestellte Lasergraviermaschine (200) ist in diesem Zusammenhang dazu konfiguriert, dass die in Fig. 5C gezeigte Sektionsgrenze (218) in den Abschnitten (218e, 218f, 218g) der Sektionsgrenze (218) so definiert wird, dass die Sektionsgrenze (218) entlang eines Rands zwischen einem Gravurbereich (220, 221) und einem Freibereich (228) oder entlang eines Rands zwischen einem Vollgravurbereich (220) und einem Rastergravurbereich (221) verläuft. Als Mittel zur Definition der Sektionsgrenze (218) entlang des jeweiligen Rands ist der Prozessor (252) dazu eingerichtet, bei der Definition der Sektionsgrenze (218) entsprechende Ränder des Gravurbilds zu erkennen und zu berücksichtigen. Hierdurch wird ebenfalls erreicht, dass die Sektionsgrenze (218) im späteren Druckbild nicht so leicht für das menschliche Auge erkennbar ist.

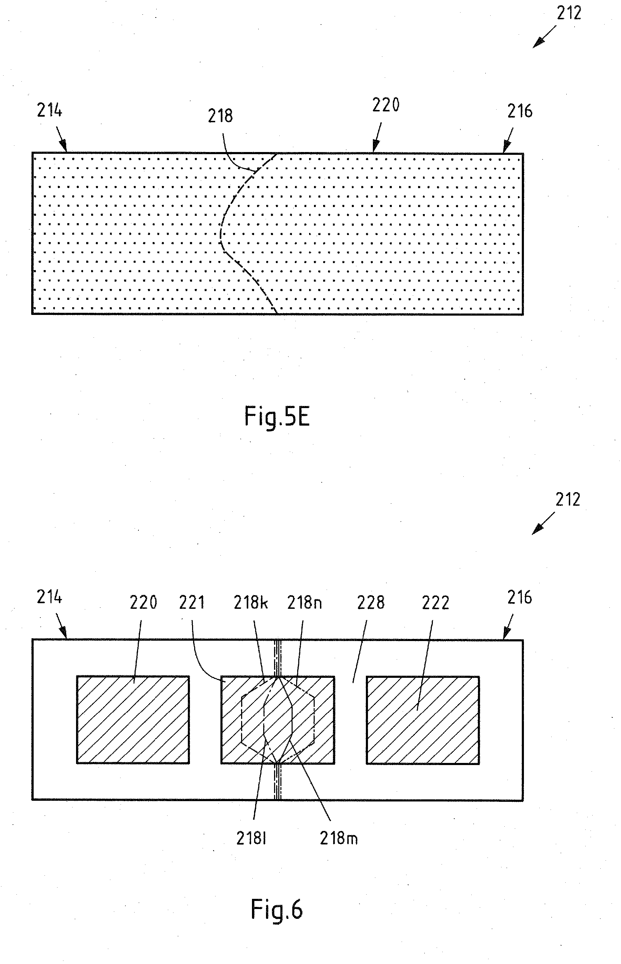

Schließlich zeigt Fig. 5E eine bevorzugte Ausführungsform der Erfindung, bei der die Sektionsgrenze (218) in einem Abschnitt der Sektionsgrenze (218) basierend auf einer Benutzereingabe definiert wird. Hierzu zeigt Fig. 5E ein Gravurbild (212), das aus einem zusammenhängenden Rastergravurbereich (220) besteht. Hier hat der Benutzer den gezeigten Verlauf der Sektionsgrenze (218) vorgegeben, wodurch das Gravurbild (212) in die Bildsektionen (214, 216) unterteilt wird und von mehreren Lasergraviereinheiten simultan graviert werden kann. Der Abschnitt, in dem die Sektionsgrenze (218) basierend auf einer Benutzereingabe definiert wurde, umfasst hier die gesamte Sektionsgrenze (218). Durch die Definition der Sektionsgrenze (218) basierend auf einer Benutzereingabe wird unter anderem erreicht, dass ein Benutzer, welcher ein Verfahren gemäß der ersten Lehre der Erfindung initiiert oder steuert, Einfluss auf die Definition der mindestens einen Sektionsgrenze nehmen kann.

Fig. 6 zeigt eine schematische Darstellung von vier übereinanderliegenden Gravurbildern (212), die vier zusammengehörigen Druckformen für einen Mehrfarbdruck zugeordnet sind, inklusive der jeweils definierten Sektionsgrenzen (218k, 218l, 218m, 218n) gemäß der ersten Lehre der Erfindung. Die Darstellung mit den übereinanderliegenden Gravurbildern wurde gewählt, um den Verlauf der Sektionsgrenzen (218k, 218l, 218m, 218n) in Bezug zueinander einfacher zeigen zu können. Die einzelnen Gravurbilder (212) der vier Farben weisen jeweils identische Abmessungen sowie gemeinsame Gravurbereiche (220, 221, 222) und einen gemeinsamen Weißbereich (228) auf. Die gemeinsamen Gravurbereiche (220, 221, 222) ergeben sich dadurch, dass hier jedes Gravurbild (212) der vier Farben einen zu gravierenden Gravurbereich aufweist. Der gemeinsame Weißbereich (228) ergibt sich dadurch, dass hier jedes Gravurbild (212) der vier Farben einen nicht zu gravierenden Weißbereich aufweist. In den gemeinsamen Gravurbereichen (220, 221, 222) der Gravurbilder (212) entsteht das fertige mehrfarbige Druckbild dadurch, dass sich die einzelnen Druckbilder der vier Farben überlagern. Wie Fig. 6 zeigt, wird zumindest in dem Bereich (221), in dem sich beim Übereinanderlegen der auf den jeweiligen Oberflächen der Druckformen zu erzeugenden Gravurbilder (212) die Gravurbereiche (220, 221, 222) von mindestens zwei Gravurbildern (212) überlappen, die Sektionsgrenze (218k, 218l, 218m, 218n) jedes an der Überlappung beteiligten Gravurbilds (212) so definiert, dass die Sektionsgrenze (218k, 218l, 218m, 218n) nicht deckungsgleich mit einer Sektionsgrenze (218k, 218l, 218m, 218n) eines anderen an der Überlappung beteiligten Gravurbilds (212) ist. Hiermit wird erreicht, dass die optische Wahrnehmbarkeit der Sektionsgrenzen (218k, 218l, 218m, 218n) im späteren Druckbild verringert wird. Zur Herstellung der vier zusammengehörigen Druckformen für einen Mehrfarbdruck wird jede Druckform durch ein Verfahren gemäß der ersten Lehre, wie beispielsweise das in Fig. 1 schematisch dargestellte Verfahren, hergestellt.

Die mit den Verfahren gemäß der ersten Lehre wie hier beschrieben hergestellten Druckformen können besonders vorteilhaft für den Verpackungs-, Etiketten-, Dekor- und/oder Zeitschriftendruck verwendet werden. Hierdurch kann bei diesen Druckanwendungen eine Verkürzung der Gravurzeit unabhängig von der Beschaffenheit des zu erzeugenden Gravurbilds erreicht werden.

## Patentansprüche

1. Verfahren zur Herstellung einer Druckform mittels Lasergravur, wobei das Verfahren (100) umfasst:
- Unterteilen (110) eines auf einer Oberfläche der Druckform zu erzeugenden Gravurbilds in mindestens zwei Bildsektionen durch Definition mindestens einer Sektionsgrenze zwischen den mindestens zwei Bildsektionen;
- Gravieren (120) der Oberfläche der Druckform unter Verwendung von mindestens zwei Lasergraviereinheiten, wobei jede der mindestens zwei Bildsektionen von einer der mindestens zwei Lasergraviereinheiten simultan graviert wird;
**dadurch gekennzeichnet, dass**
beim Unterteilen des Gravurbilds die mindestens eine Sektionsgrenze so definiert wird, dass mindestens ein Abschnitt der mindestens einen Sektionsgrenze durch einen Gravurbereich des Gravurbilds verläuft.

2. Verfahren nach Anspruch 1,
**dadurch gekennzeichnet, dass**
die mindestens eine Sektionsgrenze so definiert wird, dass mindestens ein Abschnitt der mindestens einen Sektionsgrenze durch einen Rastergravurbereich des Gravurbilds verläuft.

3. Verfahren nach Anspruch 1 oder 2,
**dadurch gekennzeichnet, dass**
entlang mindestens eines Abschnitts der mindestens einen Sektionsgrenze, in welchem die mindestens eine Sektionsgrenze durch einen Gravurbereich des Gravurbilds verläuft, ein die Sektionsgrenze umgebender Überlappungsbereich definiert wird, in dem sich die beiden aneinandergrenzenden Bildsektionen überlappen,
wobei beim Gravieren der Oberfläche der Druckform der Überlappungsbereich von beiden Lasergraviereinheiten, die den beiden aneinandergrenzenden Bildsektionen jeweils zugeordnet sind, graviert wird.

4. Verfahren nach Anspruch 3,
**dadurch gekennzeichnet, dass**
in mindestens einem Teilbereich des Überlappungsbereichs, welcher innerhalb eines Gravurbereichs des Gravurbilds liegt, ein gradueller Übergang zwischen den Gravurtiefen der beiden Lasergraviereinheiten stattfindet.

5. Verfahren nach Anspruch 3,
**dadurch gekennzeichnet, dass**
in mindestens einem Teilbereich des Überlappungsbereichs, welcher innerhalb eines Rastergravurbereichs des Gravurbilds liegt, mindestens ein vertieftes Element der Oberfläche der Druckform, welches innerhalb einer der beiden aneinandergrenzenden Bildsektionen des Gravurbilds liegt, von derjenigen Lasergraviereinheit graviert wird, welche der jeweils anderen Bildsektion zugeordnet ist.

6. Verfahren nach einem der Ansprüche 1 bis 5,
**dadurch gekennzeichnet, dass**
die mindestens eine Sektionsgrenze so definiert wird, dass die Länge der direkten Verbindungslinie zwischen dem Punkt, an dem die mindestens eine Sektionsgrenze in einen Gravurbereich eindringt, und dem Punkt, an dem die mindestens eine Sektionsgrenze aus diesem Gravurbereich austritt, gegenüber der maximal möglichen Länge reduziert wird.

7. Verfahren nach einem der Ansprüche 1 bis 6,
**dadurch gekennzeichnet, dass**
in mindestens einem Abschnitt der mindestens einen Sektionsgrenze, in welchem die mindestens eine Sektionsgrenze durch einen Rastergravurbereich des Gravurbilds verläuft, die mindestens eine Sektionsgrenze so definiert wird, dass die mindestens eine Sektionsgrenze gebogen, gewellt, gezackt und/oder auf sonstige Weise abweichend von einer durchgängigen geraden Linie verläuft.

8. Verfahren nach einem der Ansprüche 1 bis 7,
**dadurch gekennzeichnet, dass**
in mindestens einem Abschnitt der mindestens einen Sektionsgrenze, in welchem die mindestens eine Sektionsgrenze durch einen Rastergravurbereich des Gravurbilds verläuft, die mindestens eine Sektionsgrenze so definiert wird, dass die mindestens eine Sektionsgrenze entlang einer inneren Kontur des Rastergravurbereichs verläuft.

9. Verfahren nach einem der Ansprüche 1 bis 8,
**dadurch gekennzeichnet, dass**
die mindestens eine Sektionsgrenze in mindestens einem Abschnitt der mindestens einen Sektionsgrenze basierend auf einer Benutzereingabe definiert wird.

10. Verfahren nach einem der Ansprüche 1 bis 9,
**dadurch gekennzeichnet, dass**
eine Darstellung des Gravurbilds zusammen mit einer Darstellung der mindestens einen Sektionsgrenze oder zumindest zusammen mit einer Darstellung eines vorläufigen Verlaufs der mindestens einen Sektionsgrenze auf mindestens einer Anzeigeeinheit angezeigt wird.

11. Verfahren nach einem der Ansprüche 1 bis 10,
**dadurch gekennzeichnet, dass**
jede der mindestens zwei Lasergraviereinheiten mindestens eine eigene Laserquelle und mindestens einen eigenen Modulator umfasst.

12. Verfahren nach einem der Ansprüche 1 bis 11,
**dadurch gekennzeichnet, dass**
eine Druckform für den Flexodruck hergestellt wird.

13. Verfahren nach einem der Ansprüche 1 bis 12,
**dadurch gekennzeichnet, dass**
die zu gravierende Oberfläche der Druckform zumindest teilweise, vorzugsweise vollständig aus Gummi besteht.

14. Verfahren zur Herstellung von mindestens zwei zusammengehörigen Druckformen für einen Mehrfarbdruck,
**dadurch gekennzeichnet, dass**
jede der mindestens zwei zusammengehörigen Druckformen durch ein Verfahren nach einem der Ansprüche 1 bis 13 hergestellt wird,
wobei zumindest in Bereichen, in denen sich beim Übereinanderlegen der auf den jeweiligen Oberflächen der Druckformen zu erzeugenden Gravurbilder die Gravurbereiche von mindestens zwei Gravurbildern überlappen, die mindestens eine Sektionsgrenze jedes an der Überlappung beteiligten Gravurbilds so definiert wird, dass die mindestens eine Sektionsgrenze zumindest abschnittsweise nicht deckungsgleich mit einer Sektionsgrenze eines anderen an der Überlappung beteiligten Gravurbilds ist.

15. Vorrichtung oder System zur Herstellung einer Druckform mittels Lasergravur, insbesondere zur Durchführung eines Verfahrens nach einem der Ansprüche 1 bis 14, wobei die Vorrichtung (200) oder das System umfasst:
- Mittel (252) zum Unterteilen eines auf einer Oberfläche der Druckform (210) zu erzeugenden Gravurbilds (212) in mindestens zwei Bildsektionen (214, 216) durch Definition mindestens einer Sektionsgrenze (218) zwischen den mindestens zwei Bildsektionen (214, 216);
- Mittel (230, 240, 242, 244, 252) zum Gravieren der Oberfläche der Druckform (210) unter Verwendung von mindestens zwei Lasergraviereinheiten (230), wobei die Mittel (230, 240, 242, 244, 252) zum Gravieren der Oberfläche der Druckform (210) dazu konfiguriert sind, dass jede der mindestens zwei Bildsektionen (214, 216) von einer der mindestens zwei Lasergraviereinheiten (230) simultan graviert wird;
**dadurch gekennzeichnet, dass**
die Mittel (252) zum Unterteilen des Gravurbilds (212) dazu konfiguriert sind, die mindestens eine Sektionsgrenze (218) so zu definieren, dass mindestens ein Abschnitt der mindestens einen Sektionsgrenze (218) durch einen Gravurbereich (220) des Gravurbilds verläuft.

16. Computerprogrammprodukt, umfassend Befehle, die bei der Ausführung des Programms durch einen Prozessor eine Vorrichtung (200) oder ein System nach Anspruch 15 dazu veranlassen, ein Verfahren nach einem der Ansprüche 1 bis 14 auszuführen.

17. Verwendung mindestens einer durch ein Verfahren nach einem der Ansprüche 1 bis 14 hergestellten Druckform (210) für den Verpackungs-, Etiketten-, Dekor- und/oder Zeitschriftendruck.

## Geänderte Patentansprüche

### Geänderte Patentansprüche gemäss Regel 137(2) EPÜ.

1. Verfahren zur Herstellung einer Druckform mittels Lasergravur, wobei das Verfahren (100) umfasst:
- Unterteilen (110) eines auf einer Oberfläche der Druckform zu erzeugenden Gravurbilds in mindestens zwei Bildsektionen durch Definition mindestens einer Sektionsgrenze zwischen den mindestens zwei Bildsektionen;
- Gravieren (120) der Oberfläche der Druckform unter Verwendung von mindestens zwei Lasergraviereinheiten, wobei jede der mindestens zwei Bildsektionen von einer der mindestens zwei Lasergraviereinheiten simultan graviert wird;
**dadurch gekennzeichnet, dass**
beim Unterteilen des Gravurbilds die mindestens eine Sektionsgrenze so definiert wird, dass mindestens ein Abschnitt der mindestens einen Sektionsgrenze durch einen Gravurbereich des Gravurbilds verläuft,
wobei unter einem Gravurbereich ein Bereich des Gravurbilds verstanden wird, in dem eine vollflächige Gravur und/oder eine teilflächige Gravur zur Erzeugung von Rasterpunkten erfolgt.

2. Verfahren nach Anspruch 1,
**dadurch gekennzeichnet, dass**
die mindestens eine Sektionsgrenze so definiert wird, dass mindestens ein Abschnitt der mindestens einen Sektionsgrenze durch einen Rastergravurbereich des Gravurbilds verläuft, wobei unter einem Rastergravurbereich ein Bereich des Gravurbilds verstanden wird, in dem eine teilflächige Gravur zur Erzeugung von Rasterpunkten erfolgt.

3. Verfahren nach Anspruch 1 oder 2,
**dadurch gekennzeichnet, dass**
entlang mindestens eines Abschnitts der mindestens einen Sektionsgrenze, in welchem die mindestens eine Sektionsgrenze durch einen Gravurbereich des Gravurbilds verläuft, ein die Sektionsgrenze umgebender Überlappungsbereich definiert wird, in dem sich die beiden aneinandergrenzenden Bildsektionen überlappen,
wobei beim Gravieren der Oberfläche der Druckform der Überlappungsbereich von beiden Lasergraviereinheiten, die den beiden aneinandergrenzenden Bildsektionen jeweils zugeordnet sind, graviert wird.

4. Verfahren nach Anspruch 3,
**dadurch gekennzeichnet, dass**
in mindestens einem Teilbereich des Überlappungsbereichs, welcher innerhalb eines Gravurbereichs des Gravurbilds liegt, ein gradueller Übergang zwischen den Gravurtiefen der beiden Lasergraviereinheiten stattfindet.

5. Verfahren nach Anspruch 3,
**dadurch gekennzeichnet, dass**
in mindestens einem Teilbereich des Überlappungsbereichs, welcher innerhalb eines Rastergravurbereichs des Gravurbilds liegt, mindestens ein vertieftes Element der Oberfläche der Druckform, welches innerhalb einer der beiden aneinandergrenzenden Bildsektionen des Gravurbilds liegt, von derjenigen Lasergraviereinheit graviert wird, welche der jeweils anderen Bildsektion zugeordnet ist.

6. Verfahren nach einem der Ansprüche 1 bis 5,
**dadurch gekennzeichnet, dass**
die mindestens eine Sektionsgrenze so definiert wird, dass die Länge der direkten Verbindungslinie zwischen dem Punkt, an dem die mindestens eine Sektionsgrenze in einen Gravurbereich eindringt, und dem Punkt, an dem die mindestens eine Sektionsgrenze aus diesem Gravurbereich austritt, gegenüber der maximal möglichen Länge reduziert wird.

7. Verfahren nach einem der Ansprüche 1 bis 6,
**dadurch gekennzeichnet, dass**
in mindestens einem Abschnitt der mindestens einen Sektionsgrenze, in welchem die mindestens eine Sektionsgrenze durch einen Rastergravurbereich des Gravurbilds verläuft, die mindestens eine Sektionsgrenze so definiert wird, dass die mindestens eine Sektionsgrenze gebogen, gewellt, gezackt und/oder auf sonstige Weise abweichend von einer durchgängigen geraden Linie verläuft.

8. Verfahren nach einem der Ansprüche 1 bis 7,
**dadurch gekennzeichnet, dass**
in mindestens einem Abschnitt der mindestens einen Sektionsgrenze, in welchem die mindestens eine Sektionsgrenze durch einen Rastergravurbereich des Gravurbilds verläuft, die mindestens eine Sektionsgrenze so definiert wird, dass die mindestens eine Sektionsgrenze entlang einer inneren Kontur des Rastergravurbereichs verläuft.

9. Verfahren nach einem der Ansprüche 1 bis 8,
**dadurch gekennzeichnet, dass**
die mindestens eine Sektionsgrenze in mindestens einem Abschnitt der mindestens einen Sektionsgrenze basierend auf einer Benutzereingabe definiert wird.

10. Verfahren nach einem der Ansprüche 1 bis 9,
**dadurch gekennzeichnet, dass**
eine Darstellung des Gravurbilds zusammen mit einer Darstellung der mindestens einen Sektionsgrenze oder zumindest zusammen mit einer Darstellung eines vorläufigen Verlaufs der mindestens einen Sektionsgrenze auf mindestens einer Anzeigeeinheit angezeigt wird.

11. Verfahren nach einem der Ansprüche 1 bis 10,
**dadurch gekennzeichnet, dass**
jede der mindestens zwei Lasergraviereinheiten mindestens eine eigene Laserquelle und mindestens einen eigenen Modulator umfasst.

12. Verfahren nach einem der Ansprüche 1 bis 11,
**dadurch gekennzeichnet, dass**
eine Druckform für den Flexodruck hergestellt wird.

13. Verfahren nach einem der Ansprüche 1 bis 12,
**dadurch gekennzeichnet, dass**
die zu gravierende Oberfläche der Druckform zumindest teilweise, vorzugsweise vollständig aus Gummi besteht.

14. Verfahren zur Herstellung von mindestens zwei zusammengehörigen Druckformen für einen Mehrfarbdruck,
**dadurch gekennzeichnet, dass**
jede der mindestens zwei zusammengehörigen Druckformen durch ein Verfahren nach einem der Ansprüche 1 bis 13 hergestellt wird,
wobei zumindest in Bereichen, in denen sich beim Übereinanderlegen der auf den jeweiligen Oberflächen der Druckformen zu erzeugenden Gravurbilder die Gravurbereiche von mindestens zwei Gravurbildern überlappen, die mindestens eine Sektionsgrenze jedes an der Überlappung beteiligten Gravurbilds so definiert wird, dass die mindestens eine Sektionsgrenze zumindest abschnittsweise nicht deckungsgleich mit einer Sektionsgrenze eines anderen an der Überlappung beteiligten Gravurbilds ist.

15. Vorrichtung oder System zur Herstellung einer Druckform mittels Lasergravur, insbesondere zur Durchführung eines Verfahrens nach einem der Ansprüche 1 bis 14, wobei die Vorrichtung (200) oder das System umfasst:
- Mittel (252) zum Unterteilen eines auf einer Oberfläche der Druckform (210) zu erzeugenden Gravurbilds (212) in mindestens zwei Bildsektionen (214, 216) durch Definition mindestens einer Sektionsgrenze (218) zwischen den mindestens zwei Bildsektionen (214, 216);
- Mittel (230, 240, 242, 244, 252) zum Gravieren der Oberfläche der Druckform (210) unter Verwendung von mindestens zwei Lasergraviereinheiten (230), wobei die Mittel (230, 240, 242, 244, 252) zum Gravieren der Oberfläche der Druckform (210) dazu konfiguriert sind, dass jede der mindestens zwei Bildsektionen (214, 216) von einer der mindestens zwei Lasergraviereinheiten (230) simultan graviert wird;
**dadurch gekennzeichnet, dass**
die Mittel (252) zum Unterteilen des Gravurbilds (212) dazu konfiguriert sind, die mindestens eine Sektionsgrenze (218) so zu definieren, dass mindestens ein Abschnitt der mindestens einen Sektionsgrenze (218) durch einen Gravurbereich (220) des Gravurbilds verläuft,
wobei unter einem Gravurbereich ein Bereich des Gravurbilds verstanden wird, in dem eine vollflächige Gravur und/oder eine teilflächige Gravur zur Erzeugung von Rasterpunkten erfolgt.

16. Computerprogrammprodukt, umfassend Befehle, die bei der Ausführung des Programms durch einen Prozessor eine Vorrichtung (200) oder ein System nach Anspruch 15 dazu veranlassen, ein Verfahren nach einem der Ansprüche 1 bis 14 auszuführen.

17. Verwendung mindestens einer durch ein Verfahren nach einem der Ansprüche 1 bis 14 hergestellten Druckform (210) für den Verpackungs-, Etiketten-, Dekor- und/oder Zeitschriftendruck.
